# EUROPEAN PATENT APPLICATION

(11) **EP 4 844 017 A1**
(43) Date of publication of application: **25.11.2026**
(21) Application number: 25742013.3
(22) Date of filing: 17.01.2025
(51) Int. Cl.: C08J 5/18

(54) **FLUORINE-BASED RESIN FILM, FLUORINE-BASED RESIN PIEZOELECTRIC FILM AND METHOD FOR PRODUCING SAME, AND MULTILAYER PIEZOELECTRIC BODY**

(30) Priority: 18.01.2024 JP 2024006090; 18.01.2024 JP 2024006097
(71) Applicant: Kureha Corporation, Chuo-ku Tokyo 103-8552 (JP)
(72) Inventor: SAIGUSA, Kotaku, Tokyo 103-8552 (JP)
(74) Representative: Zimmermann & Partner Patentanwälte mbB
(86) International application number: PCT/JP2025/001302
(87) International publication number: WO 2025/154788

(57) **Abstract**

A fluorine-based resin film having a melt viscosity η of 600 Pa·s or more and 4000 Pa·s or less, the melt viscosity η being measured at a measurement temperature of 260°C and a shear rate of 50 s⁻¹ during measurement, wherein a lamellar long period determined by a small-angle X-ray scattering method is 11.5 nm or less.

## Description

### TECHNICAL FIELD

The present invention relates to a fluorine-based resin film and a method for producing the same, and a laminated piezoelectric body.

### BACKGROUND ART

Fluorine-based resin films have high properties, examples of the properties including weather resistance, heat resistance, contamination resistance, chemical resistance, solvent resistance, mechanical properties, and secondary processability. Thus, the fluorine-based resin films have been used in various applications such as interior and exterior members of buildings, surface materials of molded products, surface protective materials or back surface protective materials of solar cell modules, and fuel cell members. In particular, because of the high weather resistance, the contamination resistance, and the chemical resistance of the fluorine-based resin films, the fluorine-based resin films are expected to be applied to a protective film or an optical member and there is a high demand for a fluorine-based resin film having high transparency.

Also, it has been known that a fluorine-based resin film is formed into a piezoelectric film by a polarization treatment. The piezoelectric film is required to have transparency because it is used, for example, for a touch panel. The transparency of the piezoelectric film highly depends on the transparency of the fluorine-based resin film before the polarization treatment, and thus development of a fluorine-based resin film having high transparency is demanded. Note that in the present specification, a fluorine-based resin piezoelectric film or a piezoelectric film means a fluorine-based resin film having a piezoelectric constant d₃₃ of 1.0 pC/N or more as measured by a method described below.

As a method for producing a fluorine-based resin film, there are known a method for production by a solution casting method using a solution with a fluorine-based resin dissolved (for example, Patent Document 1) and a method including thermally melting and extrusion molding a fluorine-based resin (Patent Document 2).

### CITATION LIST

### PATENT DOCUMENT

Patent Document 1: WO 2015/064324
Patent Document 2: JP H05-102548 A

### SUMMARY OF INVENTION

### TECHNICAL PROBLEM

In the solution casting method, a large amount of polar organic solvent is used for dissolving the fluorine-based resin, and thus the solvent needs to be recovered, and not only the production cost becomes relatively high, but also consideration needs to be given to the influence of the organic solvent on the working environment and the natural environment. Furthermore, a polar organic solvent is used for dissolving the fluorine-based resin. Thus, when the solvent remains in the fluorine-based resin film, polarization in the production process of the piezoelectric film may be hindered. Accordingly, it is preferable to form a film by extrusion molding of a thermally melted fluorine-based resin without using an organic solvent.

On the other hand, in the method including thermally melting and extrusion molding a fluorine-based resin, when the resin is heated to a high temperature, the resin may be modified, which causes a problem such as generation of a decomposed product (foreign substances).

To perform extrusion molding by a thermally melting method while suppressing modification such as decomposition of the resin, it is preferable to use a fluorine-based resin having a low melt viscosity. However, a fluorine-based resin film formed by extrusion molding of such a resin thermally melted has a problem of low transparency.

In particular, a piezoelectric film used, for example, for a touch panel is required to have high transparency and a high piezoelectric constant. To produce such a fluorine-based resin piezoelectric film having high transparency, the fluorine-based resin film as a material is required to have high transparency.

The present invention has been made in view of the above problems. The present invention is directed to provide a fluorine-based resin film having high transparency and exhibiting high piezoelectricity by a stretching treatment and a polarizing treatment, a fluorine-based resin piezoelectric film having high transparency and piezoelectricity, a method for producing the same, and a laminated piezoelectric body.

### SOLUTION TO PROBLEM

One embodiment of the present invention for solving the above problems relates to a fluorine-based resin film of [1] to [5] below.
[1] A fluorine-based resin film having a melt viscosity η of 600 Pa·s or more and 4000 Pa·s or less, the melt viscosity η being measured at a measurement temperature of 260°C and a shear rate of 50 s⁻¹ during measurement, wherein a lamellar long period determined by a small-angle X-ray scattering method is 11.5 nm or less.
[2] The fluorine-based resin film according to [1], wherein the fluorine-based resin film is a film for a piezoelectric film and has a thickness of 80 µm or more and 1000 µm or less.
[3] The fluorine-based resin film according to [1] or [2], containing a structural unit derived from vinylidene fluoride as a main component.
[4] The fluorine-based resin film according to any one of [1] to [3], wherein the number of foreign substances, each having a size of 100 µm or more, is 7/0.25 m² or less, the size being an arithmetic average value of a maximum width and a minimum width when the film is viewed in plan.
[5] The fluorine-based resin film according to any one of [1] to [4], wherein a maximum height of profile Rz of a surface having a smaller maximum height of profile is 0.50 µm or less, the maximum height of profile Rz being measured in accordance with JIS B 0601:2001.
   One embodiment of the present invention for solving the above problems relates to a method for producing a fluorine-based resin film of [6] to [7] below.
[6] A method for producing the fluorine-based resin film described in any one of [1] to [5], the method including:
   heat-melting a fluorine-based resin having a melt viscosity η of 600 Pa·s or more and 4000 Pa·s or less, the melt viscosity η being measured at a measurement temperature of 260°C and a shear rate of 50 s⁻¹ during measurement;
   extruding the heat-melted fluorine-based resin and forming the heat-melted fluorine-based resin into a film shape; and
   bringing the formed film into contact with a cooling roll having a surface temperature of 125°C or lower and cooling the formed film.
[7] The method for producing the fluorine-based resin film according to [6], wherein
   in the heat-melting, the fluorine-based resin is melted at a temperature higher than a melting temperature of the fluorine-based resin by 75°C or more and equal to or lower than a temperature higher than the melting temperature by 105°C, and the method further includes
   filtering the fluorine-based resin melted at the temperature through a filter having a filtration accuracy of 10 µm or more and 40 µm or less.

One embodiment of the present invention for solving the above problems relates to a fluorine-based resin piezoelectric film of [1] to [5] below.
[1] A fluorine-based resin piezoelectric film having a melt viscosity η of 600 Pa·s or more and 4000 Pa·s or less, the melt viscosity η being measured at a measurement temperature of 260°C and a shear rate of 50 s⁻¹ during measurement, wherein
   a lamellar long period determined by a small-angle X-ray scattering method is 11.5 nm or less, a retardation is 100 nm or more and 2000 nm or less, and a piezoelectric constant d₃₃ is 5.0 pC/N or more and 40.0 pC/N or less.
[2] The fluorine-based resin piezoelectric film according to [1], wherein an internal haze is less than 1.2%.
[3] The fluorine-based resin piezoelectric film according to [1] or [2], wherein a maximum height of profile Rz of a surface having a smaller maximum height of profile is 0.50 µm or less, the maximum height of profile Rz being measured in accordance with JIS B 0601:2001.
[4] The fluorine-based resin piezoelectric film according to any one of [1] to [3], wherein
   the number of foreign substances, each having a size of 100 µm or more, is 7/0.25 m² or less, the size being an arithmetic average value of a maximum width and a minimum width when the film is viewed in plan.
[5] The fluorine-based resin piezoelectric film according to any one of [1] to [4], containing
   a structural unit derived from vinylidene fluoride as a main component.
   One embodiment of the present invention for solving the above problems relates to a method for producing a piezoelectric film of [6] to [8] below.
[6] A method for producing the fluorine-based resin piezoelectric film described in any one of [1] to [5], the method including:
   heating and melting a fluorine-based resin having a melt viscosity η of 600 Pa·s or more and 4000 Pa·s or less, the melt viscosity η being measured at a measurement temperature of 260°C and a shear rate of 50 s⁻¹ during measurement;
   extruding the melted fluorine-based resin and forming the melted fluorine-based resin into a film shape;
   bringing the formed film into contact with a cooling roll having a surface temperature of 125°C or lower and cooling the formed film;
   stretching the cooled film; and
   polarizing the cooled film.
[7] The method for producing the fluorine-based resin piezoelectric film according to [6], wherein
   in the melting, the fluorine-based resin is melted at a temperature higher than a melting point of the fluorine-based resin by 75°C or more and equal to or lower than a temperature higher than the melting point of the fluorine-based resin by 105°C.
[8] The method for producing the fluorine-based resin piezoelectric film according to [6] or [7], the method further including
   filtering the fluorine-based resin melted in the melting through a filter having a filtration accuracy of 10 µm or more and 40 µm or less.

One embodiment of the present invention for solving the above problems relates to a laminated piezoelectric body described in [1] to [6] below.
[1] A laminated piezoelectric body including the fluorine-based resin piezoelectric film described in any one of [1] to [5], wherein a total light transmittance is 80% or more.
[2] The laminated piezoelectric body according to [1], further including an electrode layer disposed on at least one surface of the fluorine-based resin piezoelectric film and having a surface resistivity of 1.0 × 10⁻¹ Ω/sq. or more and 1.0 × 10⁴ Ω/sq. or less.
[3] The laminated piezoelectric body according to [2], wherein
   the electrode layer contains at least one selected from the group consisting of a metal film, a metal oxide film, a metal nanowire, a metal mesh, a conductive polymer compound, a carbon nanotube, and graphene.
[4] The laminated piezoelectric body according to any one of [1] to [3], further including
   a hard coat layer disposed on at least one surface of the fluorine-based resin piezoelectric film.
[5] The laminated piezoelectric body according to any one of [1] to [4], further including
   an antistatic layer disposed on at least one surface of the fluorine-based resin piezoelectric film and having a surface resistivity of 1.0 × 10⁴ Ω/sq. or more and 1.0 × 10⁹ Ω/sq. or less.
[6] The laminated piezoelectric body according to any one of [1] to [5], wherein the antistatic layer and the hard coat layer are disposed in this order on at least one surface of the fluorine-based resin piezoelectric film, and a surface resistivity measured on the hard coat layer is 1.0 × 10⁶ Ω/sq. or more and 1.0 × 10¹² Ω/sq. or less.

### ADVANTAGEOUS EFFECTS OF INVENTION

According to the present invention, there are provided the fluorine-based resin film having high transparency, the fluorine-based resin piezoelectric film having high transparency, the method for producing the same, and the laminated piezoelectric body.

### BRIEF DESCRIPTION OF DRAWINGS

FIG. 1 is a graph showing a relationship between a lamellar long period and a piezoelectric constant d₃₃.
FIG. 2 is a schematic view illustrating a laminated piezoelectric body according to one embodiment of the present invention.

### DESCRIPTION OF EMBODIMENTS

One embodiment of the present invention relates to a fluorine-based resin film, and a fluorine-based resin piezoelectric film that can be produced therefrom.

### Materials of Fluorine-Based Resin Film and Fluorine-Based Resin Piezoelectric Film

Each of the fluorine-based resin film and the fluorine-based resin piezoelectric film may be a film containing a fluororesin as a main component. The fluororesin is a resin obtained by polymerizing a monomer composed of an olefin containing fluorine, and the phrase "containing a fluororesin as a main component" means that the content ratio of a structural unit derived from a monomer composed of an olefin containing fluorine relative to the total mass of the fluorine-based resin film is 50 mass% or more. A proportion of the content of the fluorine-based resin relative to the total mass of the fluorine-based resin film is preferably 50 mass% or more and 100 mass% or less, more preferably 70 mass% or more and 100 mass% or less, and still more preferably 90 mass% or more and 100 mass% or less.

The fluorine-based resin can be a homopolymer or a copolymer obtained by polymerizing, for example, tetrafluoroethylene (TFE) or vinylidene fluoride (VDF). Examples of the fluorine-based resin obtained by polymerizing TFE include copolymers of TFE with, for example, ethylene, perfluoroalkyl vinyl ether, VDF, 1-chloro-1-fluoro-ethylene, chlorotrifluoroethylene (CTFE), and hexafluoropropylene (HFP). Examples of the fluorine-based resin obtained by polymerizing VDF include a homopolymer of VDF, and a copolymer of VDF with, for example, 1-chloro-1-fluoro-ethylene, 1-chloro-2-fluoro-ethylene, trifluoroethylene, TFE, CTFE, tetrafluoropropene, HFP, and perfluoroalkyl vinyl ether.

Among these, from the viewpoint of making it easy to polarize the fluorine-based resin film, a fluorine-based resin obtained by polymerizing a monomer containing VDF is preferable, a homopolymer of VDF, a copolymer of VDF and HFP, a copolymer of VDF and trifluoroethylene, a copolymer of VDF and TFE, a copolymer of VDF, trifluoroethylene, TFE, and CTFE, and a copolymer of vinylidene fluoride VDF, trifluoroethylene, TFE, and 1-chloro-1-fluoro-ethylene are more preferable, and a homopolymer of VDF is still more preferable. Only one of these fluorine-based resins may be used alone or two or more thereof may be used in combination.

The fluorine-based resin film and the fluorine-based resin piezoelectric film each preferably contain a structural unit derived from VDF as a main component, and a homopolymer of VDF is most preferable. The phrase "contain a structural unit derived from VDF as a main component" means that the content ratio of the structural unit derived from VDF relative to the total mass of each of the fluorine-based resin film and the fluorine-based resin piezoelectric film is 50 mass% or more. The content ratio of the structural unit derived from VDF relative to the total mass of each of the fluorine-based resin film and the fluorine-based resin piezoelectric film is preferably 50 mass% or more and 100 mass% or less, more preferably 70 mass% or more and 100 mass% or less, and still more preferably 90 mass% or more and 100 mass% or less.

In particular, the fluorine-based resin film and the fluorine-based resin piezoelectric film are expected to have high piezoelectricity, and thus the content ratio of the homopolymer of vinylidene fluoride is preferably as high as possible. The content ratio of the homopolymer relative to the total mass of the fluorine-based resin film is preferably 50 mass% or more and 100 mass% or less, more preferably 70 mass% or more and 100 mass% or less, and still more preferably 90 mass% or more and 100 mass% or less.

The content ratio of the resin having VDF as a structural unit contained in each of the fluorine-based resin film and the fluorine-based resin piezoelectric film can be measured by quantitative analysis using ¹⁹F-NMR and an internal standard.

The melt viscosity of each of the fluorine-based resin film and the fluorine-based resin piezoelectric film measured at a measurement temperature of 260°C and a shear rate of 50 s⁻¹ during measurement is 600 Pa·s or more and 4000 Pa·s or less, preferably 600 Pa·s or more and 3500 Pa·s or less, and more preferably 600 Pa·s or more and 2400 Pa·s or less. A resin having a lower melt viscosity can be formed into a film by extrusion at a lower melting temperature. However, in such a resin having a low melt viscosity, movement of molecular chains is facilitated. Thus, selective alignment of the molecular chains proceeds during film formation, and crystals are likely to grow. The refractive index of light is different between a crystalline portion and an amorphous portion. Thus, scattering of light at the interface between the crystalline portion and the amorphous portion increases due to the growth of the crystal of the resin, which decreases the transparency of the film. In contrast, even in a fluorine-based resin having a low melt viscosity, by quenching the film after film formation, the crystal growth of the film is suppressed, the scattering of light is reduced, and a film having high transparency can be obtained. A lamellar period length determined by an X-ray diffraction method is a good index that indicates a crystallite size of the film. The smaller the crystallite size, the smaller the lamellar long period. In addition, a lower melt viscosity facilitates filtration through a filter. The melting temperature can be kept low. Thus, spot-like irregularities on the film surface due to modification of the resin are less likely to be generated.

The melt viscosity is measured in accordance with ASTM D 3835:2016 (ISO 11443:2021, JIS K 7199:1999). Specifically, the viscosity is measured at a measurement temperature of 260°C and a shear rate of 50 s⁻¹ using a capillary rheometer (Capilograph 1D, available from Toyo Seiki Seisaku-sho, Ltd.) and a capillary die having an inner diameter of φ 1 mm and a tube length of 10 mm.

### Properties of Fluorine-Based Resin Film and Fluorine-Based Resin Piezoelectric Film

Hereinafter, properties of properties of the fluorine-based resin film and the fluorine-based resin piezoelectric film according to the present embodiment will be described. Note that values of the respective physical properties described below are values measured by the following methods, respectively.

### Method for Measuring Physical Properties

The lamellar long period of each of the fluorine-based resin film and the fluorine-based resin piezoelectric film can be calculated by measuring an X-ray diffraction pattern of the fluorine-based resin film with a small-angle X-ray scattering measurement apparatus and using the Bragg reflection equation. Specifically, the fluorine-based resin film is placed in the small-angle X-ray scattering measurement apparatus and irradiated with CuKα rays (wavelength λ equal to 0.15418 nm) monochromatized by an Ni filter as an X-ray source, and a two-dimensional diffracted image is measured using a two-dimensional detector. Then, an X-ray scattering intensity (B (2θ)) by air is subtracted from the X-ray scattering (diffraction) intensity (A (2θ)) measured by the above method. Thus, an X-ray scattering (diffraction) intensity (I (2θ)) is determined with respect to the diffraction angle 2θ in a range that the diffraction angle2θ is 0.200° to 2.000°.

The background of I (2θ) is determined by linear approximation from the diffraction angle 2θ showing the lowest X-ray intensity in a range that 2θ is 0.200° to 0.450°, the X-ray intensity thereof, and the X-ray intensity at 2θ of 2.000°. Next, the background is subtracted from I (2θ). In the obtained X-ray intensity curve, the diffraction angle 20 at which the X-ray intensity is maximized (peak top) is determined, and a lamellar long period L is determined by the Bragg reflection equation shown in Equation 1.
[Math. 1]
Bragg reflection equation: $L = \frac{0.15418}{2 sin θ} \left(nm\right)$ (Equation 1)

The thickness of the fluorine-based resin film not having piezoelectricity is generally measured by a method using a micrometer (JIS C 2151:2019), but is measured by a known method such as a method using a laser displacement meter, a method using an electrostatic capacitance displacement meter, or a method using infrared rays. When, in the fluorine-based resin film, the intersection of two diagonal lines is defined as a center point A and the long-side direction is defined as a width direction, the thickness is measured at a total of three measurement points, i.e., the center point A (measurement point) and two measurement points set at positions 30 mm away from the center point A toward both ends on a line segment passing through a midpoint A parallel to the long side, and the average value thereof is defined as the thickness of the fluorine-based resin film. When the shape of the fluorine-based resin film is circular or polygonal, the film is cut into a rectangle so as to have the maximum area, and the thickness is measured by the above method.

On the other hand, the thickness of the fluorine-based resin film having piezoelectricity (fluorine-based resin piezoelectric fill) is measured in the same manner as in the above method for measuring the thickness of the film not having piezoelectricity except for the setting of the measurement points. Specifically, the fast axis direction determined by measuring the birefringence of the piezoelectric film is defined as the width direction, and a randomly selected point on the midpoint line of the line segment connecting both ends of the film in the width direction is defined as a point A, and the thickness is measured at a total of three measurement points, i.e., the point A (measurement point) and two measurement points set at 30 mm intervals from the point A toward both ends on the line segment in the width direction passing through the point A, and the average value thereof is defined as the thickness of the fluorine-based resin piezoelectric film.

As for the number of foreign substances, the proportion of foreign substances present near the surface increases as the film becomes thinner. Thus, foreign substances tend to be more easily detected, when the film is viewed in plan. Accordingly, to quantify the amount of foreign substances in the film, the thickness of the film to be subjected to the foreign substance measurement is set to 40 µm or less. 25 rectangular films (observation pieces) are cut continuously and adjacently from the fluorine-based resin film (including the fluorine-based resin piezoelectric film) having a film thickness of 40 µm or less, and the sum of the numbers of foreign substances measured from the respective observation pieces is determined. When the fluorine-based resin film has a thickness more than 40 µm, the film is stretched until the thickness of the film reaches a thickness of from 35 µm to 40 µm or less, and then the number of foreign substances is measured by the method described below. Specifically, the 25 observation pieces, each having a size of 0.010 m² (100 mm × 100 mm), are cut from the film to be measured so as to be continuously adjacent to each other. Then, the sum of the numbers of foreign substances measured from the respective observation pieces is obtained. At this time, each of the foreign substances is marked by observation with transmitted light, the marked portion is observed with a microscope, and the size of each of the foreign substances is obtained. The size of each of the foreign substances is an arithmetic average value of a maximum width and a minimum width of each of the foreign substances.

The maximum height of profile Rz of the fluorine-based resin film not having piezoelectricity is measured in accordance with JIS B 0601:2001. Specifically, a surface-roughness profilometer (shape analysis laser microscope VK-X260, available from Keyence Corporation) in accordance with JIS B 0601:2001 is used. When, in the fluorine-based resin film having a rectangular shape, the intersection of the diagonal lines is defined as a center point A and the long-side direction is defined as a width direction, the maximum height of profile Rz is measured at a total of three measurement points, i.e., the center point A (measurement point) and two measurement points set at positions 30 mm away from the center point A toward both ends on a line segment passing through a midpoint A parallel to the long side, and the average value thereof is defined as the maximum height of profile of the fluorine-based resin film. When the shape of the fluorine-based resin film is circular or polygonal, the film is cut into a rectangle so as to have the maximum area, and the maximum height of profile is measured by the above method. Note that the surface of the fluorine-based resin film in contact with a cooling roll tends to have a smaller surface roughness Rz as compared with the surface not in contact with the roll. This is because the fluorine-based resin film is pressed against the cooling roll and thus the irregularities of the surface are reduced. This tendency is also maintained in the fluorine-based resin piezoelectric film after stretching and polarization. Here, the measurement result of a surface having a smaller surface roughness Rz (contact surface with the cooling roll) is defined as the maximum height of profile Rz.

On the other hand, the maximum height of profile Rz of the fluorine-based resin piezoelectric film is measured in the same manner as in the above-described method for measuring Rz of the film not having piezoelectricity except for the setting of the measurement points. Specifically, the fast axis direction determined by measuring the birefringence of the piezoelectric film is defined as the width direction, and a randomly selected point on the midpoint line of the line segment connecting both ends of the film in the width direction is defined as a point A, and the maximum height of profile Rz is measured at a total of three measurement points, i.e., the point A (measurement point) and two measurement points set at 30 mm intervals from the point A toward both ends on the line segment in the width direction passing through the point A, and the average value thereof is defined as the maximum height of profile Rz of the fluorine-based resin piezoelectric film.

The haze of the fluorine-based resin film not having piezoelectricity is measured in accordance with JIS K 7136:2000. Specifically, a haze meter (NDH7700SP II, available from Nippon Denshoku Industries Co., Ltd.) is used. When, in the fluorine-based resin film having a rectangular shape, the intersection of the diagonal lines is defined as a center point A and the long-side direction is defined as a width direction, the haze is measured at a total of three measurement points, i.e., the center point A (measurement point) and two measurement points set at positions 30 mm away from the center point A toward both ends on a line segment passing through a midpoint A parallel to the long side, and the average value thereof is defined as the haze of the fluorine-based resin film. When the shape of the fluorine-based resin film is circular or polygonal, the film is cut into a rectangle so as to have the maximum area, and the haze is measured by the above method. The haze of the fluorine-based resin film is divided by the thickness of the fluorine-based resin film and the result is defined as the haze per unit thickness of the fluorine-based resin film.

The haze of the fluorine-based resin piezoelectric film is also measured in the same manner as in the above method except for the setting of the measurement points. Specifically, the fast axis direction determined by measuring the birefringence of the fluorine-based resin piezoelectric film is defined as the width direction, and a randomly selected point on the midpoint line of the line segment connecting both ends of the film in the width direction is defined as a point A, and the haze is measured at a total of three measurement points, i.e., the point A (measurement point) and two measurement points set at 30 mm intervals from the point A toward both ends on the line segment in the width direction passing through the point A, and the average value thereof is defined as the haze of the fluorine-based resin piezoelectric film.

At this time, a transparent coating layer is formed on the surface of the film to be measured, and the haze measured on the assumption that an external haze, for example, due to a scratch on the film surface is removed is defined as an internal haze of the film. Specifically, the fast axis direction determined by measuring the birefringence of the fluorine-based resin piezoelectric film is defined as a width direction, and a randomly selected point on the midpoint line of the line segment connecting both ends of the film in the width direction is defined as a point A, and a measurement sample having a size of 30 mm × 30 mm is cut out in such a manner that the point A is the center of diagonal lines of the measurement sample, and two measurement samples are cut out toward both ends in the width so as to be adjacent to the measurement sample, and thus a total of three measurement samples are collected. A hard coating agent (BS CH271, available from Arakawa Chemical Industries, Ltd.) was applied to one of the surfaces of each of the three cut-out measurement samples with a bar coater and dried at 80°C for 30 minutes. Next, using an ultraviolet light (UV) irradiator (CSOT040, available from GS NIPPON DENCHI), UV irradiation is performed in such a manner that the target integrated light quantity reaches 400 mJ/cm². Thus, a coating layer having a thickness of 2 µm is formed. Assuming that the external haze, for example, due to a scratch on the film surface is removed by these coating layers, the measured haze value is defined as the internal haze. The average value of the three measurement samples measured in the same manner is defined as a representative value of the fluorine-based resin piezoelectric film.

The retardation of the fluorine-based resin piezoelectric film is a value measured by a parallel Nicol rotation method using a light source having a wavelength of 587.8 nm. At this time, the fast axis and the slow axis are determined from the in-plane birefringence of the film. The slow axis direction coincides with the average direction of the molecular chains oriented by stretching or extrusion. Thus, when the film is subjected to a stretching treatment in the MD direction (machine direction), the MD direction and the slow axis direction coincide with each other.

The piezoelectric constant of the fluorine-based resin piezoelectric film is measured in accordance with ISO 19622:2018, which is a test method for a piezoelectric constant d₃₃ by a direct quasi-static method (d₃₃ meter method, Berlincourt method). Specifically, a test piece of the fluorine-based resin piezoelectric film is held at a holding force of 1.0 N, and a charge generated when an alternating force with a oscillating force of 0.15 N and a frequency of 110 Hz is applied is measured using a piezoelectric constant measuring device (PiezoMeter System PM300, available from PIEZOTEST Pte Ltd.). The charge is measured on the polarized surface of the fluorine-based resin piezoelectric film, and the piezoelectric constant is calculated using the absolute value of the measured value. At this time, the fast axis direction determined by measuring the birefringence of the fluorine-based resin piezoelectric film is defined as the width direction, and a randomly selected point on the midpoint line of the line segment connecting both ends of the film in the width direction is defined as a point A, and the piezoelectric constant d₃₃ is measured at a total of three measurement points, i.e., the point A (measurement point) and two measurement points set at positions 30 mm away from the point A toward both ends on the line segment in the width direction passing through the point A, and the average value of the piezoelectric constants obtained therefrom is defined as the piezoelectric constant d₃₃ of the fluorine-based resin piezoelectric film.

### Properties of Fluorine-Based Resin Film

The fluorine-based resin film has a lamellar long period of 11.5 nm or less, preferably 8.0 nm or more and 11.0 nm or less, more preferably 8.5 nm or more and 10.8 nm or less, as determined by a small-angle X-ray scattering method. The shorter the lamellar long period, the smaller the size of the crystal of the resin contained in the fluorine-based resin film. By reducing the size of the crystal, the transparency of the fluorine-based resin film and the transparency of the piezoelectric film prepared therefrom can be enhanced. According to the findings of the present inventors, the shorter the lamellar long period, the more easily piezoelectric constant d₃₃ is increased when the fluorine-based resin film is subjected to a polarization treatment. This suggests that the shorter the lamellar long period, the smaller the size of the crystal in the film. It is considered that this appropriate size of the crystal can increase an amount of orientation polarization in a polarizing step and thus increase d₃₃.

The thickness of the fluorine-based resin film is preferably 80 µm or more and 1000 µm or less, more preferably 100 µm or more and 500 µm or less, still more preferably 100 µm or more and 300 µm or less, still even more preferably 120 µm or more and 200 µm or less, and particularly preferably 120 µm or more and 180 µm or less. When the film is made thicker, it is more advantageous in terms of mechanical properties such as abrasion resistance, durability, and insulation properties, and surface irregularities due to wrinkles are less likely to be generated, for example, by the stretching treatment. On the other hand, when the film is made thinner, it is advantageous in terms of optical properties such as transparency and cost.

The proportion of foreign substances present near the surface increases as the film becomes thinner, and thus foreign substances tend to be more easily detected when the film is viewed in plan. Accordingly, to quantify the amount of foreign substances in the film, the thickness of the film to be subjected to the foreign substance measurement is set to 40 µm or less. The number of foreign substances, each having a size of 100 µm or more, when the fluorine-based resin film having a film thickness of 40 µm or less is viewed in plan, is preferably 7/0.25 m² or less, more preferably 0/0.25 m² or more and 5/0.25 m² or less, still more preferably 0/0.25 m² or more and 3/0.25 m² or less, and particularly preferably 0/0.25 m² or more and 1/0.25 m² or less.

The number of foreign substances, each having a size of more than 200 µm, when the fluorine-based resin film having a film thickness of 40 µm or less is viewed in plan, is preferably 0/0.25 m² or more and 3/0.25 m² or less, more preferably 0/0.25 m² or more and 2/0.25 m² or less, still more preferably 0/0.25 m² or more and 1/0.25 m² or less, and particularly preferably 0/0.25 m².

The number of foreign substances, each having a size of less than 100 µm, when the fluorine-based resin film having a film thickness of 40 µm or less is viewed in plan, is preferably 0/0.25 m² or more and 50/0.25 m² or less, more preferably 0/0.25 m² or more and 25/0.25 m² or less, and still more preferably 0/0.25 m² or more and 16/0.25 m² or less.

As the number of these foreign substances is smaller, the transparency of the fluorine-based resin film is improved, and when the fluorine-based resin film is subjected to the stretching treatment or the polarization treatment, the stretching or polarization can be performed uniformly.

The maximum height of profile Rz of the fluorine-based resin film is preferably 0.50 µm or less, more preferably 0.01 µm or more and 0.50 µm or less, still more preferably 0.01 µm or more and 0.45 µm or less, and particularly preferably 0.01 µm or more and 0.40 µm or less. As the surface of the fluorine-based resin film is made smoother, haze is less likely to occur on the surface of the film, and excellent transparency is obtained. A small maximum height of profile Rz indicates that the film has few irregularities such as wrinkles.

The haze per unit thickness of the fluorine-based resin film is preferably 0.00%/µm or more and less than 0.35%/µm, more preferably 0.00%/µm or more and 0.30%/µm or less, and still more preferably 0.00%/µm or more and 0.25%/µm or less.

### Properties of Fluorine-Based Resin Piezoelectric Film

The fluorine-based resin piezoelectric film has a lamellar long period by a small-angle X-ray scattering method of 11.5 nm or less, preferably 8.0 nm or more and 11.0 nm or less, and more preferably 8.5 nm or more and 11.0 nm or less. It can be said that the shorter the lamellar long period, the smaller the crystal size of the resin contained in the fluorine-based resin piezoelectric film. By reducing the crystal size, the transparency of the fluorine-based resin piezoelectric film can be enhanced. According to the findings of the present inventors, when the lamellar long period is 11.5 nm or less, the piezoelectric constant d₃₃ is further increased when the fluorine-based resin film is subjected to the polarization treatment.

The fluorine-based resin piezoelectric film has a retardation of 100 nm or more and 2000 nm or less, preferably 500 nm or more and 1800 nm or less, and more preferably 700 nm or more and 1600 nm or less. As the retardation is larger, the degree of molecular orientation of the fluorine-based resin film is higher, the proportion of β-crystals is sufficiently increased, and a fluorine-based resin piezoelectric film having a high piezoelectric constant is easily obtained by the polarizing step.

The piezoelectric constant d₃₃ of the fluorine-based resin piezoelectric film is 5.0 pC/N or more and 40.0 pC/N or less, preferably 8.0 pC/N or more and 40.0 pC/N or less, and more preferably 10.0 pC/N or more and 30.0 pC/N or less.

In the fluorine-based resin piezoelectric film, the haze of the film is preferably 0.0% or more and 10.0% or less, more preferably 0.0% or more and 5.0% or less, and still more preferably 0.0% or more and 3.0% or less. The lower the haze, the more the transparency of the fluorine-based resin piezoelectric film is improved.

In the fluorine-based resin piezoelectric film, the internal haze is preferably less than 1.2%, more preferably 0.3% or more and 1.1% or less, and still more preferably 0.1% or more and 1.0% or less. The lower the internal haze, the more the transparency of the fluorine-based resin piezoelectric film is improved.

The maximum height of profile Rz of the fluorine-based resin piezoelectric film is preferably 0.50 µm or less, more preferably 0.05 µm or more and 0.50 µm or less, still more preferably 0.05 µm or more and 0.40 µm or less, and particularly preferably 0.05 µm or more and 0.30 µm or less. As the surface of the fluorine-based resin piezoelectric film is made smoother, haze is less likely to occur on the surface of the film and excellent transparency is obtained. A small maximum height of profile Rz indicates that the film has few irregularities such as wrinkles.

The number of foreign substances, each having a size of 100 µm or more, when the fluorine-based resin piezoelectric film having a film thickness of 40 µm or less is viewed in plan, is preferably 0/0.25 m² or more and 7/0.25 m² or less, more preferably 0/0.25 m² or more and 5/0.25 m² or less, still more preferably 0/0.25 m² or more and 3/0.25 m² or less, and particularly preferably 0/0.25 m² or more and 1/0.25 m² or less.

The number of foreign substances, each having a size of more than 200 µ, when the fluorine-based resin piezoelectric film having a film thickness of 40.0 µm or less is viewed in plan, is preferably 0/0.25 m² or more and 3/0.25 m² or less, more preferably 0/0.25 m² or more and 2/0.25 m² or less, and still more preferably 0/0.25 m² or more and 1/0.25 m² or less.

The number of foreign substances, each having a size of less than 100 µm, when the fluorine-based resin piezoelectric film having a film thickness of 40 µm or less is viewed in plan, is preferably 0/0.25 m² or more and 50/0.25 m² or less, more preferably 0/0.25 m² or more and 25/0.25 m² or less, and still more preferably 0/0.25 m² or more and 16/0.25 m² or less.

As the number of these foreign substances is smaller, the transparency of the fluorine-based resin piezoelectric film is improved and stretching or polarization can be performed uniformly.

The thickness of the fluorine-based resin piezoelectric film is not particularly limited, but is preferably 10.0 µm or more and 200.0 µm or less, more preferably 15.0 µm or more and 80.0 µm or less, still more preferably 20.0 µm or more and 80.0 µm or less, particularly preferably 30.0 µm or more and 80.0 µm or less, extremely preferably 35.0 µm or more and 70.0 µm or less, and most preferably 35.0 µm or more and 50.0 µm or less. When the film is made thicker, it is advantageous for electrical properties such as insulating properties and piezoelectric properties. When the film is made thinner, it is advantageous in terms of optical properties such as transparency and cost.

### Others

Note that the fluorine-based resin film may contain a resin besides the fluorine-based resin or another additive as long as the above-described physical properties can be satisfied.

Examples of the resin besides the fluorine-based resin include polycarbonate, polyester such as polyethylene terephthalate and polyethylene naphthalate, a silicone resin, polyether, polyvinyl acetate, and polyolefin such as polyethylene and polypropylene, which can be added to increase flexibility, an acrylic resin, an epoxy resin, polyethylene oxide, polypropylene oxide, polyphenylene oxide, polyphenylene sulfide, polyamide, polyimide, polyamideimide, polystyrene, polybenzimidazole, and the like, which can be added to increase strength, and odd-numbered polyamide, cyanopullulan, copper phthalocyanine-based polymer, and the like, which can be added to further increase dielectric properties.

### Method for Producing Fluorine-Based Resin Film and Fluorine-Based Resin Piezoelectric Film

A method for producing each of the fluorine-based resin film and fluorine-based resin piezoelectric film as described above is not particularly limited, but preferably includes a step of forming a film from a thermally melted resin by extrusion molding.

For example, the fluorine-based resin film can be prepared by performing a step of heating and melting the above-described fluorine-based resin (melting step), and a step of forming the filtered fluorine-based resin into a film shape (film forming step). At this time, a step of filtering the fluorine-based resin melted in the melting step (filtering step) may be further performed.

In addition, piezoelectricity is imparted to the fluorine-based resin film by subjecting the fluorine-based resin film to a step of stretching (stretching step) and a step of polarizing (polarizing step) to impart piezoelectricity. Thus, a fluorine-based resin piezoelectric film can be prepared.

### Melting Step

In the melting step, the fluorine-based resin is heated and melted. This step can be performed by, for example, melt-kneading the fluorine-based resin with an extruder.

When the fluorine-based resin to be melted in the melting step contains a solvent component, polarization in the subsequent step may be hindered by the solvent component remaining without being volatilized, and thus the content of the solvent component in the fluorine-based resin is preferably small, and is preferably 1 mass% or less and more preferably 0.1 mass% or less with respect to the total mass of the fluorine-based resin. In particular, the content of a polar solvent is preferably 100 ppm or less, more preferably 10 ppm or less, and still more preferably 1 ppm or less, with respect to the total mass of the fluorine-based resin.

The melting temperature of the fluorine-based resin is preferably a temperature higher than the melting point of the fluorine-based resin by 75°C or more and equal to or lower than a temperature higher than the melting point by 105°C, more preferably a temperature higher than the melting point by 75°C or more and equal to or lower than a temperature higher than the melting point by 100°C, still more preferably a temperature higher than the melting point by 80°C or more and equal to or lower than a temperature higher than the melting point by 100°C, and particularly preferably a temperature higher than the melting point by 85°C or more and equal to or lower than a temperature higher than the melting point by 95°C. When the melting temperature is set to a temperature higher than the melting point of the fluorine-based resin by 75°C or more, the viscosity of the fluorine-based resin can be reduced to such an extent that the fluorine-based resin can be filtered in the subsequent step. When the melting temperature is set to a temperature equal to or lower than a temperature higher than the melting point of the fluorine-based resin by 105°C, for example, the decomposition and the condensation of the fluorine-based resin due to heating can be suppressed, and generation of, for example, a decomposition product due to the decomposition and the condensation can be suppressed. When the generation of, for example, the decomposition product is suppressed, the amount of foreign substances in the fluorine-based resin film can be reduced, and the transparency and the smoothness of the fluorine-based resin film can be enhanced. In addition, by suppressing the generation of, for example, the decomposition product, clogging of the filter due to the decomposition and the condensation can be suppressed and filtration efficiency of the fluorine-based resin can be enhanced, when the fluorine-based resin is filtered.

According to the findings of the present inventors, the fluorine-based resin needs to be heated to a high temperature to make the resin having a high melt viscosity have a viscosity that enables filtration. When the resin is heated to a high temperature, for example, decomposition and condensation is likely to occur and clogging of the filter is likely to occur. Thus, it has been difficult to melt and filter the fluorine-based resin. In contrast, the present inventors have found that the fluorine-based resin can be efficiently filtered by setting the melting temperature of the fluorine-based resin having an appropriate melt viscosity to the above range. When the melting temperature of the fluorine-based resin is set to the above range and the fluorine-based resin having a viscosity reduced by melting is filtered, the fluorine-based resin can be filtered without using a polar solvent. In addition, by using no solvent, inhibition of polarization by a solvent during the polarization treatment due to such a polar solvent remaining in the fluorine-based resin film is less likely to occur. Furthermore, a polar solvent is not generally used in the film forming step, and thus, the burden on the working environment and the natural environment can be reduced and the production cost for recovering the polar solvent can be reduced.

### Filtering Step

In the filtering step, the fluorine-based resin melted and reduced in viscosity in the melting step is filtered. The method of filtering is not particularly limited, and the melted fluorine-based resin may be caused to pass through a filter. A known filter type such as a pleated filter or a leaf disc filter can be used.

The filtration accuracy of the filter is preferably 10 µm or more and 40 µm or less, more preferably 10 µm or more and 35 µm or less, and still more preferably 15 µm or more and 30 µm or less. When a filter having a filtration accuracy of 10 µm or more is used, the melted fluorine-based resin is easily filtered, the filtration pressure does not become too high and the filtration time can be shortened. In addition, when the filter to be used has a filtration accuracy of 10 µm or more, the filtration pressure does not become too high, and the filtration time can be shortened. When the filter to be used has a filtration accuracy of 40 µm or less, foreign substances in the fluorine-based resin can be sufficiently removed, and a fluorine-based resin film having few foreign substances can be obtained.

Note that the filter for performing the filtering of the fluorine-based resin has a multilayer structure including a plurality of layers having, for example, different shapes and different openings. The filtration accuracy of a filter for filtering the fluorine-based resin indicates the filtration efficiency of the filter, that is, the fact that the filter can filter out particles having the size at a predetermined filtration efficiency. For example, in the present specification, a filtration accuracy of 10 µm means that the filter can filter out particles having a size of 10 µm or more with a filtration efficiency of 95% or more.

In this step, the filtering of the fluorine-based resin in which the fluorine-based resin may be caused to pass through a plurality of filters may be performed a plurality of times. For example, coarse foreign substances may be removed by a filter having a low filtration accuracy (a large numerical value of the filtration accuracy) disposed in a preceding stage, and then finer foreign substances may be removed by a filter having a high filtration accuracy (a small numerical value of the filtration accuracy) disposed in a subsequent stage. The filtration accuracy at this time is set to be a value of a filter having the highest filtration accuracy.

The filter may be disposed between an extruder and a die, the extruder and the die configured to perform the film forming step. Alternatively, a filter may be disposed in an extruder or a melt-kneading apparatus, the extruder being different from the extruder configured to perform the film forming step, and the fluorine-based resin filtered through the above-described filter may be fed into the extruder configured to perform the film forming step and thus a film may be formed.

### Film Forming Step

In the film forming step, the fluorine-based resin filtered in the filtering step is formed into a film shape.

The film forming method is not particularly limited, and a known method such as extruding the melted and filtered fluorine-based resin from a T-die and bringing the extruded fluorine-based resin into contact with a cooling roll and cooling the extruded fluorine-based resin can be used. In the present embodiment, the surface temperature of the cooling roll at this time is set to 125°C or lower. When the fluorine-based resin film extruded with the cooling roll having a low surface temperature is quenched, a large number of fine crystals are formed, and the lamellar long period of the obtained fluorine-based resin film can be shortened. According to the findings of the present inventors, the crystallization rate of the fluorine-based resin having a low melt viscosity used in the present embodiment is different from that of a fluorine-based resin having a higher melt viscosity, and the lamellar long period of the obtained fluorine-based resin film is likely to change greatly depending on the temperature of the cooling roll. Accordingly, in the present embodiment, it is considered that the temperature adjustment of the cooling roll is important. The surface temperature of the cooling roll is preferably 5°C or higher and 110°C or lower, more preferably 20°C or higher and 80°C or lower, and still more preferably 30°C or higher and 60°C or lower.

In this manner, the fluorine-based resin film according to the present embodiment can be obtained. The produced fluorine-based resin film may be directly accommodated, for example, by being wound up, or may be conveyed to a stretching step or a polarizing step as a subsequent step.

### Stretching Step

In the stretching step, the formed fluorine-based resin film is uniaxially stretched. In the stretching step, the fluorine-based resin film formed in the film forming step may be directly stretched, or the fluorine-based resin film once wound and accommodated may be optionally stretched, for example, by heating.

In the stretching, the stretching direction is not limited as long as the stretching is uniaxial stretching. In the stretching step in mass production, it is preferable to continuously uniaxially stretch the fluorine-based resin film. Specifically, the fluorine-based resin film can be uniaxially stretched in a conveying direction (MD direction) while being conveyed by a plurality of rolls. The stretch ratio (ratio in the MD direction) is preferably 2.5 times or more and 6.0 times or less, and more preferably 3.5 times or more and 5.0 times or less. When the stretch ratio is 2.5 times or more, the proportion of β-crystals described below is sufficiently increased, and a fluorine-based resin film having a high piezoelectric constant is easily obtained by the polarizing step. When the stretch ratio is 6.0 times or less, the fluorine-based resin film is less likely to be broken in the stretching step. In the film uniaxially stretched in the MD direction, the MD direction is the slow axis direction, and a direction (TD direction) perpendicular to the stretching direction is the fast axis direction.

### Polarizing Step

In the polarizing step, a DC voltage is applied to the fluorine-based resin film and piezoelectricity is imparted to the fluorine-based resin film. In the fluorine-based resin containing a homopolymer or copolymer of VDF, an α-crystal is transformed into a β-crystal by the stretching step, and the proportion of β-crystals is increased. By applying a DC voltage to the fluorine-based resin film having an increased proportion of β-crystals having polarity, a fluorine-based resin film having a high piezoelectric constant can be obtained.

The DC voltage to be applied is preferably 7.0 kV or more and 50.0 kV or less, and more preferably 7.5 kV or more and 30.0 kV or less.

The stretching step and the polarizing step may be performed simultaneously, or the polarizing step may be performed after the stretching step is performed.

The fluorine-based piezoelectric resin film after the polarizing step can be wound into a roll shape, stored and transported.

### Use

The above-described fluorine-based resin film can be used for producing the fluorine-based resin piezoelectric film. In addition, the fluorine-based resin film can be used in various applications such as interior and exterior materials for an automobile, furniture, and a building material, a protective film, and a retardation film. The above-described fluorine-based resin piezoelectric film can also be used in various applications such as a touch sensor and a touch panel, a piezoelectric film for an actuator, interior and exterior materials for an automobile, furniture, and a building material, a protective film, and a retardation film.

One embodiment of the present invention relates to a laminated piezoelectric body.

### Laminated Piezoelectric Body

The fluorine-based resin film described above can be used as a piezoelectric film. A laminated piezoelectric body can be formed by laminating the fluorine-based resin piezoelectric film (hereinafter, also simply referred to as "piezoelectric film") with another functional layer or another film. The laminated piezoelectric body may include an antistatic layer for the purpose of preventing static electricity generated during handling and may include a hard coat layer or an optical adjustment layer from the viewpoint of preventing the antistatic layer from being scratched or adjusting the hue, as necessary. Furthermore, the laminated piezoelectric body may optionally include an electrode layer for detecting an electric signal generated by piezoelectricity of the piezoelectric film. In addition, a moisture-proof layer can be included to further prevent discoloration or a decrease in transparency of the fluorine-based resin piezoelectric film over time when moisture penetrates from the outside under a high temperature and a high humidity. When the electrode layer is a film having excellent moisture resistance, such as a metal film or a metal oxide film, the film may be also used as a moisture-proof layer. On the other hand, when the electrode layer includes, for example, a metal nanowire or a metal mesh, the metal may be oxidized to decrease conductivity, and thus the laminated piezoelectric body may further include an overcoat layer on a non-adhesive surface (a surface opposite to the piezoelectric film) of the electrode layer.

That is, the laminated piezoelectric body includes at least the above piezoelectric film. The laminated piezoelectric body can further include one or more of the antistatic layer, the hard coat layer, the optical adjustment layer, the moisture-proof layer, the electrode layer, and the overcoat layer on at least one surface of the piezoelectric film. These layers can be optionally combined. For example, the laminated piezoelectric body may include the electrode layer on at least one surface of the piezoelectric film and may further include the antistatic layer or the overcoat layer.

Hereinafter, the laminated piezoelectric body according to an embodiment of the present invention and a method for producing the same will be specifically described. However, the laminated piezoelectric body is not to be limited to the present embodiment.

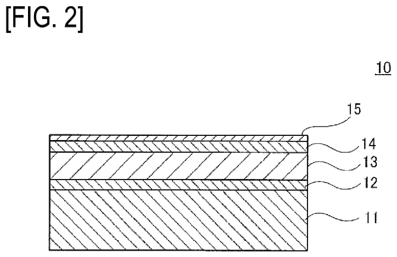

FIG. 2 is a schematic cross-sectional view illustrating the laminated piezoelectric body according to the present embodiment.

As illustrated in FIG. 2, a laminated piezoelectric body 10 can have a piezoelectric film 11, an antistatic layer 12, a hard coat layer 13, an optical adjustment layer 14, and an electrode layer 15 in this order. Hereinafter, each layer will be described.

### Piezoelectric Film

As the piezoelectric film, the above fluorine-based resin piezoelectric film can be used. The piezoelectric constant d₃₃ of the piezoelectric film and the thickness of the piezoelectric film can be the same as the piezoelectric constant d₃₃ and the thickness of the fluorine-based resin piezoelectric film described above, respectively.

### Antistatic Layer

The antistatic layer can be disposed on at least one surface of the piezoelectric film. In the present embodiment, the antistatic layer is preferably in contact with the piezoelectric film. The antistatic layer can make the laminated piezoelectric body less likely to generate static electricity.

The antistatic layer can contain a cured product of a curable composition containing a conductive material. The curable composition containing a conductive material may contain a conductive material, a curable resin, and optionally a crosslinking agent, or may contain a conductive material and a crosslinking agent.

The conductive material may be an ion-conductive conductive material or an electron-conductive conductive material.

Examples of the ion-conductive conductive material include (a) cationic antistatic agents having a cationic group, examples of which include quaternary ammonium salts, pyridinium salts, and primary to tertiary amino groups; (b) anionic antistatic agents, each having an anionic group, examples of the anionic group including a sulfonate group, a sulfate ester group, a phosphate ester group, and a phosphonate group; (c) amphoteric antistatic agents, such as amino acid-based antistatic agents and amino sulfate-based amphoteric antistatic agents; and (d) nonionic antistatic agents such as amino alcohol-based, glycerin-based, and polyethylene glycol-based nonionic antistatic agents.

Examples of the electron-conductive conductive material include a conductive polymer and conductive materials other than the conductive polymer. Examples of the conductive polymer include polyacetylene or a derivative thereof, polythiophene or a derivative thereof, polypyrrole or a derivative thereof, and polyaniline or a derivative thereof. Among these, polythiophene or a derivative thereof is preferred from the viewpoint that the transparency is high and high conductivity is exhibited. These conductive polymers may have a functional group such as a sulfone group, an amino group, an amide group, a hydroxyl group, a mercapto group, or a carboxyl group. Examples of the conductive materials other than the conductive polymer include a carbon nanotube and graphene.

Among them, from the viewpoint of easily lowering the surface resistivity of the laminated piezoelectric body and hardly causing bleed-out, it is preferable to contain an electron-conductive conductive material, and a carbon nanotube is more preferable.

Examples of the curable resin include an acrylic resin, an epoxy resin, a polyurethane resin, a polyimide resin, a melamine resin, a polyester resin, a polyvinyl alcohol resin, a polystyrene resin, a polyvinyl acetate resin, a silicone compound, and polyethylene glycol, each of which has a functional group such as a hydroxy group, a methylol group, a carboxyl group, a sulfonyl group, an epoxy group, or an amino group.

The crosslinking agent may be any agent as long as it reacts with a functional group of the curable resin or the conductive polymer to crosslink the curable resin or the conductive polymer. Examples of the crosslinking agent include a melamine-based crosslinking agent, a polycarbodiimide-based crosslinking agent, a polyoxazolidine-based crosslinking agent, a polyepoxy-based crosslinking agent, and a polyisocyanate-based crosslinking agent.

As described above, as the curable resin or the crosslinking agent for yielding the antistatic layer, for example, a curable resin or a crosslinking agent having an amino group, such as a melamine resin (these are also referred to as "amine-based materials") may be used. In particular, the melamine resin may be preferably used from the viewpoint of having low-temperature curability. On the other hand, such an amine-based material produces an amine (base) that causes a dehydrofluorination reaction of the fluorine-based resin under a high temperature and a high humidity. The production may cause discoloration of the piezoelectric film. Even in such a case, by incorporating the electrode layer or the moisture-proof layer described above, the production of an amine can be suppressed, and thus the discoloration of the piezoelectric film in the laminated piezoelectric body can be further suppressed.

The surface resistivity of the antistatic layer is, for example, preferably 1.0 × 10⁴ Ω/sq. or more and 1.0 × 10⁹ Ω/sq. or less, and more preferably 1.0 × 10⁵ Ω/sq. or more and 1.0 × 10⁸ /sq. or less. When the surface resistivity of the antistatic layer is 1.0 × 10⁹ Ω/sq. or less, the surface resistivity of the laminated piezoelectric body can be further reduced, and an antistatic property can be sufficiently imparted. To prevent deterioration of the laminated piezoelectric body, the laminated piezoelectric body may be handled in a state where a hard coat layer is formed on the antistatic layer. When the surface resistivity measured on the hard coat layer is 1.0 × 10⁶ Ω/sq. or more and 1.0 × 10¹² Ω/sq. or less, a sufficient antistatic property is easily obtained. The surface resistivity is more preferably 1.0 × 10⁸ Ω/sq. or more and 5.0 × 10¹¹ Ω/sq. or less.

The surface resistivity of the antistatic layer can be measured, for example, using a known resistivity meter (for example, a high resistivity meter (available from Nittoseiko Analytech Co., Ltd., Hiresta UX, model number: MCP-HT800, URS probe) in accordance with JIS K 6911.

The thickness of the antistatic layer is not particularly limited, but is, for example, preferably 0.010 µm or more and 0.40 µm or less. When the thickness of the antistatic layer is 0.010 µm or more, the generation of static electricity in the laminated piezoelectric body can be further suppressed. When the thickness of the antistatic layer is 0.40 µm or less, discoloration of the piezoelectric film in the laminated piezoelectric body can be made less likely to occur. From the same viewpoint, the thickness of the antistatic layer is more preferably 0.030 µm or more and 0.40 µm or less, and still more preferably 0.045 µm or more and 0.30 µm or less.

The thickness of the antistatic layer can be measured using a spectral interferometric thickness meter (for example, Optical NanoGauge C13027-11, available from Hamamatsu Photonics K.K.). The thickness of each layer in a range including the center of the surface of the laminated piezoelectric body is measured at three points, and the arithmetic average value thereof can be obtained as the thickness of each layer. The thickness of each of the following layers can be measured in the same manner.

### Hard Coat Layer

The hard coat layer can be disposed between the piezoelectric film and the electrode layer. In the present embodiment, the hard coat layer is disposed adjacently to the piezoelectric film (see FIG. 2). The hard coat layer fills scratches on the surface of the piezoelectric film to smooth the surface and makes the surface of the piezoelectric film less likely to be scratched in the production process of the laminated piezoelectric body. Thus, haze of the laminated piezoelectric body can be reduced.

The thickness of the hard coat layer is not particularly limited, but is 0.05 µm or more, preferably 0.3 µm or more and 3.0 µm or less, more preferably 0.5 µm or more and 2.0 µm or less, and still more preferably 0.5 µm or more and 1.5 µm or less.

As described above, the refractive index of the hard coat layer is preferably higher than the refractive index of the piezoelectric film and lower than the refractive index of the electrode layer. Specifically, the refractive index of the hard coat layer is preferably 1.40 or more and less than 1.60, more preferably 1.47 or more and 1.57 or less, and still more preferably 1.49 or more and 1.55 or less. When the refractive index of the hard coat layer is within the above range, interference fringes can be further suppressed while the transmittance is further enhanced.

A difference in refractive index between the hard coat layer and the piezoelectric film is preferably 0.01 or more and 0.20 or less. When the difference in refractive index is 0.01 or more, the transmittance can be further enhanced. When the difference in refractive index is 0.20 or less, interference fringes can be further suppressed.

The hard coat layer may be formed of a material that satisfies the above refractive index. The hard coat layer is usually a resin layer. The resin layer may be formed by applying an application liquid containing a resin and then drying the application liquid or may be formed by applying a curable composition containing a polymerizable compound and then drying and curing the curable composition.

The polymerizable compound may be any of a monomer, an oligomer, or a polymer. The polymerizable compound may be a thermosetting compound or an ionizing radiation compound, but is preferably an ionizing radiation compound. The ionizing radiation may typically be ultraviolet light (UV) or an electron beam (EB).

The ionizing radiation compound is a compound having an ionizing radiation-curable functional group. Examples of the ionizing radiation-curable functional group include ethylenically unsaturated bond groups such as a (meth)acryloyl group, a vinyl group, and an allyl group, and ring-opening polymerizable groups such as an epoxy group and an oxetanyl group. Among them, a compound having an ethylenically unsaturated bond group is preferable, a compound having two or more ethylenically unsaturated bond groups is more preferable, and a polyfunctional (meth)acrylate-based compound is still more preferable. The term "(meth)acrylate" means one or both of acrylate and methacrylate.

Examples of a bifunctional (meth)acrylate-based monomer among the polyfunctional (meth)acrylate-based compounds include ethylene glycol di(meth) acrylate, bisphenol A tetraethoxy diacrylate, bisphenol A tetrapropoxy diacrylate, and 1,6-hexanediol diacrylate. Examples of the (meth)acrylate-based monomer having three or more functional groups include trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, and isocyanuric acid-modified tri(meth)acrylate. The (meth)acrylate-based monomer may be one with a part of the molecular skeleton modified, or one modified with, for example, ethylene oxide, propylene oxide, caprolactone, isocyanuric acid, alkyl, cyclic alkyl, aromatic, or bisphenol can also be used.

Examples of the polyfunctional (meth)acrylate-based oligomer include acrylate-based polymers such as urethane (meth)acrylate, epoxy (meth)acrylate, polyester (meth)acrylate, and polyether (meth)acrylate. Urethane (meth)acrylate is obtained, for example, by a reaction of a polyhydric alcohol and an organic diisocyanate with a hydroxy (meth)acrylate.

In a case where the ionizing radiation-curable compound is an ultraviolet-curable compound, the curable composition preferably contains a photopolymerization initiator. Examples of the photopolymerization initiator include one or more selected from acetophenone, benzophenone, α-hydroxyalkylphenone, Michler's ketone, benzoin, benzyl methyl ketal, benzoyl benzoate, α-acyloxime ester, and thioxanthones.

The curable composition may further contain an additional component besides the above components as necessary. For example, from the viewpoint of suppressing blocking of the hard coat layer in the production process or adjusting the refractive index, the curable composition may further contain particles. The particles may be inorganic particles or organic particles.

Examples of the inorganic particles include, for example, particles of silica (silicon oxide), particles of titanium oxide, particles of zirconium oxide, particles of aluminum oxide, particles of zinc oxide and tin oxide, diamond powder, sapphire particles, boron carbide particles, silicon carbide particles, and antimony pentoxide particles. Examples of the organic particles include, for example, resin particles of an acrylic resin, resin particles of an acrylic-styrene copolymer, and resin particles of a silicone resin. Among them, inorganic particles are preferable, and silica particles are more preferable, from the viewpoint that the transparency of the hard coat layer is less likely to be impaired. The surface of the inorganic particles may be treated with a surface modifier such as a silane coupling agent.

As described below, the laminated piezoelectric body may further include an optical adjustment layer between the antistatic layer and the electrode layer. The total thickness of the hard coat layer and the optical adjustment layer is preferably 0.30 µm or more and 4.0 µm or less. When the total thickness is 4.0 µm or less, the penetration of moisture from the outside through these layers can be further suppressed, and the effect of suppressing the discoloration of the piezoelectric film by incorporating the moisture-proof layer is more easily maintained. In addition, when the total thickness is 0.30 µm or less, the color tone of the laminated piezoelectric body can be suppressed, and the transparency can be enhanced. From the same viewpoint, the total thickness, the total thickness is more preferably 0.50 µm or more and 3.0 µm or less, and still more preferably 0.60 µm or more and 2.0 µm or less.

### Optical Adjustment Layer

The optical adjustment layer can be disposed between the hard coat layer and a transparent conductive layer. By appropriately adjusting the refractive index and the thickness of the optical adjustment layer, the color tone of the laminated piezoelectric body can be suppressed.

Specifically, as described above, the refractive index of the optical adjustment layer is preferably higher than the refractive index of the hard coat layer and lower than the refractive index of the transparent conductive layer. The laminated piezoelectric body including such an optical adjustment layer can suppress the color tone, for example, by an interference action between light incident on and reflected by the hard coat layer and light reflected by the interface between the optical adjustment layer and the hard coat layer.

From the above viewpoint, the refractive index of the optical adjustment layer is preferably 1.60 or more and less than 1.80, more preferably 1.63 or more and less than 1.78, and still more preferably 1.65 or more and 1.75 or less.

The difference in refractive index between the optical adjustment layer and the hard coat layer is preferably 0.05 or more. When the difference in refractive index is 0.05 or more, the transmittance can be further enhanced.

The thickness of the optical adjustment layer is not particularly limited, but may be 0.05 µm or more. For example, the thickness of the optical adjustment layer may be 0.05 µm or more and 0.5 µm or less, or may be 0.09 µm or more and 0.18 µm or less. When the thickness of the optical adjustment layer is within the above range, the color tone of the laminated piezoelectric body can be suppressed.

The material of the optical adjustment layer may be a material that satisfies such a refractive index. For example, the material may be a material having a refractive index adjusted by adding metal oxide particles to the curable composition exemplified as the material of the hard coat layer.

The metal oxide particles are preferably a refractive index material having a refractive index of 1.50 or more. Examples of such metal oxide particles include aluminum oxide, titanium oxide, zirconium oxide, zinc oxide, and tin oxide, and among these, titanium oxide and zirconium oxide are preferable.

### Transparent Electrode

The transparent electrode (electrode layer) may be formed by sputtering a conductive material on the piezoelectric film on which the respective layers are formed, or by applying a mixture of a conductive material, for example, with a resin.

The electrode layer may be disposed on at least one surface side of the piezoelectric film. The form of the electrode layer is not limited, and may be a nanowire, a mesh, or a thin film. The thin film may be a single layer or a laminate including a plurality of layers.

The conductive material forming the electrode layer is not limited, and at least one metal selected from the group consisting of In, Sn, Zn, Ga, Sb, Ti, Si, Zr, Mg, Al, Au, Ag, Cu, Pd, and W and a metal oxide thereof are suitably used. The metal oxide may further contain a metal atom shown in the above group, as necessary. As the metal oxide, for example, indium tin composite oxide (ITO) and antimony-tin composite oxide (ATO) are preferably used, and ITO is particularly preferably used. Examples of another typical conductive material of the electrode layer include at least one selected from the group consisting of a metal nanowire, a metal mesh, a conductive polymer compound, a carbon nanotube, and graphene. In particular, examples of the metal nanowire and the metal mesh include a silver nanowire, a silver mesh, a copper nanowire, and a copper mesh. Examples of the conductive polymer compound include polyacetylene and a derivative thereof, polythiophene and a derivative thereof, polypyrrole and a derivative thereof, and polyaniline and a derivative thereof.

In the present embodiment, the conductive material is preferably a metal oxide, and more preferably ITO.

Note that a silver nanowire has been attracting attention as a conductive material suitable for weight reduction, resistance reduction, high transparency, and high flexibility of a transparent conductive material, which are required for a device with a larger area and higher functionality. In particular, the silver nanowire can be used to form a flexible electrode layer by a wet process and is expected to be used in various applications. However, the silver nanowire is made of metal silver, and thus the conductivity tends to decrease under high humidity and high temperature conditions, both under sunlight and under artificial light. Thus, a protective layer (overcoat layer) is preferably formed by using an overcoat agent such as a UV curable resin and applying, drying, and curing the overcoat agent on the silver nanowire coating film. In this manner, an electrode layer having scratch resistance and durability can be formed on the substrate and long-term stability of a surface electrical resistance value can be realized under sunlight.

The lower the surface resistivity of the electrode layer, the easier it is to detect a minute signal of the piezoelectric film. On the other hand, to reduce the surface resistivity of the electrode layer, it is necessary to thicken the electrode layer or increase the amount of the conductive material added to form the electrode layer, and thus the transparency tends to decrease. Thus, the surface resistivity of the electrode layer is 1.0 × 10⁻¹ Ω/sq. or more and 1.0 × 10⁴ or less, preferably 1.0 × 10⁻¹ Ω/sq. or more and 1.0 × 10³ or less, more preferably 1.0 × 10⁻¹ Ω/sq. or more and 1.0 × 10² or less, and particularly preferably 1.0 Ω/sq. or more and 1.0 × 10² or less.

The surface resistivity (Ω/sq.) of the electrode layer is measured using a resistivity meter ("LorestaGP MCP-T610", available from Mitsubishi Chemical Analytech Co., Ltd.) by a direct-current four-point probe method in accordance with JIS K 7194-1994. When the overcoat layer is formed on the electrode layer, the surface resistivity detected on the overcoat layer is defined as the surface resistivity of the electrode layer. A volume resistivity is the product of the surface resistivity and the thickness, and thus the surface resistivity is measured in accordance with the method for measuring the volume resistivity. The surface resistivity is measured in a range including the intersection of diagonal lines of the laminated piezoelectric body.

The thickness of the electrode layer is not limited, but the electrode layer is preferably as thick as possible from the viewpoint of having good conductivity. On the other hand, when the electrode layer is too thick, transparency may be reduced. When the electrode layer is too thin, electric resistance may be increased, and a portion with discontinuous conductivity may be formed in the film structure. The thickness is preferably 10 nm or more and 55 nm or less, more preferably 15 nm or more and 55 nm or less, still more preferably 20 nm or more and 55 nm or less, still even more preferably 20 nm or more and 45 nm or less, and particularly preferably 20 nm or more. The thickness of the electrode layer can be determined by a known method from observation of a cross-section of such a laminate. As to the thickness of the electrode layer, the cross-section of the laminated piezoelectric body is observed using a scanning electron microscope ("SU3800", available from Hitachi High-Technologies Corporation) under the conditions of an acceleration voltage of 3.0 kV and a magnification of 50000 times, a thickness of the electrode layer in a range including the intersection of the diagonal lines of the laminated piezoelectric body is measured, and the measured thickness is taken as the thickness of the electrode layer of the laminated piezoelectric body.

In the above embodiment, the electrode layer is formed on the optical adjustment layer, but the present invention is not limited thereto. For example, as described above, when the electrode layer contains a metal nanowire or a metal mesh as a conductive material, the optical adjustment layer may be omitted. In this case, the overcoat layer may be further disposed on the electrode layer from the viewpoint of suppressing oxidation of the metal nanowire or the metal mesh. When the overcoat layer is disposed on the electrode layer, the surface resistivity of the electrode layer refers to the surface resistivity measured on the overcoat layer.

In addition, in the above embodiment, the electrode layer is formed on the optical adjustment layer, but a transparent electrode film with an electrode layer formed on a surface of a substrate such as glass or a polymer material may be formed by adhesion to the optical adjustment layer.

### Transparent Electrode Film

The transparent electrode may be used in combination with an existing substrate film. The existing electrode layer may be formed, for example, by laminating the above-described electrode layer on a substrate containing any one or more polymer materials such as, polyethylene terephthalate (PET), cycloolefin polymer (COP), and polycarbonate (PC) or a substrate containing an inorganic material such as glass.

The substrate is a transparent resin layer for supporting the electrode layer. A transparent resin contained in the substrate is preferably a material having heat resistance to withstand heat for crystallizing, for example, ITO. Examples of such a transparent resin include polyester such as polyethylene terephthalate (PET). Among these, PET is preferred.

The thickness of the substrate is not particularly limited as long as it can support the electrode layer, but is preferably 2 µm or more and 300 µm or less, more preferably 10 µm or more and 200 µm or less, still more preferably 20 µm or more and 150 µm or less, and particularly preferably 30 µm or more and 130 µm or less.

The electrode layer is disposed on a surface of the substrate on the piezoelectric film side (optical adjustment layer side in FIG. 2). As the electrode layer, for example, an inorganic electrode such as ITO (indium oxide-tin composite oxide) or tin oxide is preferred, and ITO is more preferred.

### Moisture-Proof Layer

In the above embodiment, the laminated piezoelectric body has the piezoelectric film, but may include a moisture-proof layer to further prevent discoloration or a decrease in transparency of the piezoelectric film over time when moisture penetrates from the outside under a high temperature and a high humidity. The material of the moisture-proof layer is not particularly limited as long as it has transparency and can suppress the penetration of moisture, but is preferably constituted by an inorganic oxide. More preferably, the material of the moisture-proof layer is a thin film (for example, vapor deposition film) of an inorganic oxide.

The inorganic oxide is an oxide of a metal, an oxide of a nonmetal, or an oxide of a metalloid. Examples of the inorganic oxide include aluminum oxide, zinc oxide, antimony oxide, indium oxide, indium tin oxide, calcium oxide, cadmium oxide, silver oxide, gold oxide, chromium oxide, silicon oxide, cobalt oxide, zirconium oxide, tin oxide, titanium oxide, iron oxide, copper oxide, nickel oxide, platinum oxide, palladium oxide, bismuth oxide, magnesium oxide, manganese oxide, molybdenum oxide, vanadium oxide, and barium oxide, and indium tin oxide and silicon oxide are particularly preferable.

The thickness of the moisture-proof layer is not particularly limited, but is preferably 0.005 µm or more and 0.100 µm or less, more preferably 0.010 µm or more and 0.060 µm or less, and still more preferably 0.015 µm or more and 0.050 µm or less, from the viewpoint of highly achieving both the moisture resistance and the transparency.

### Physical Properties of Laminated Piezoelectric Body

### Piezoelectric Constant d₃₃

A piezoelectric constant d₃₃ of the laminated piezoelectric body is preferably 7.0 pC/N or more and 40.0 pC/N or less, for example. When the piezoelectric constant d₃₃ of the laminated piezoelectric body is 7.0 pC/N or more, higher pressure sensitivity is likely to be obtained. When the piezoelectric constant d₃₃ of the laminated piezoelectric body is 40.0 pC/N or less, the above-described appearance failure can be further reduced. From the same viewpoint, the piezoelectric constant d₃₃ of the laminated piezoelectric body is more preferably 10.0 pC/N or more and 40.0 pC/N or less, still more preferably 13.0 pC/N or more and 35.0 pC/N or less, and particularly preferably 15.0 pC/N or more and 30.0 pC/N or less. The piezoelectric constant d₃₃ of the laminated piezoelectric body can be measured by the same method as described above except that the measurement position is a single intersection point of diagonal lines of the laminated piezoelectric body.

The piezoelectric constant d₃₃ of the laminated piezoelectric body can be adjusted, for example, by the piezoelectric constant d₃₃ of the piezoelectric film which is one of constituent units of the laminated piezoelectric body. When the piezoelectric constant d₃₃ of the piezoelectric film is high, the piezoelectric constant d₃₃ of the laminated piezoelectric body is likely to be high as well.

### Total Light Transmittance

The laminated piezoelectric body preferably has high transparency, for example, from the viewpoint of being applied to a touch panel. Specifically, the total light transmittance of the laminated piezoelectric body is preferably 80% or more, and more preferably 85% or more.

The total light transmittance of the laminated piezoelectric body can be measured using a haze meter (for example, NDH7000SP II, available from Nippon Denshoku Industries Co., Ltd.) based on the method described in JIS K 7361-1. The total light transmittance is to be measured at a position including the intersection of the diagonal lines of the laminated piezoelectric body.

The total light transmittance of the laminated piezoelectric body can be adjusted by the layer configuration, and the refractive index and thickness of each layer. For example, when the laminated piezoelectric body includes the hard coat layer, the haze of the laminated piezoelectric body can be further reduced, and thus the total light transmittance is likely to be higher.

### Hue b^{*} Value, Δb^{*}

The laminated piezoelectric body preferably has a hue b* value of -5.0 or more and 5.0 or less. When the hue b* value is set to -5.0 or more and 5.0 or less, good transparency and good visibility can be achieved. The b^{*} value of the laminated piezoelectric body before storage is preferably -5.0 or more and 5.0 or less, for example. The hue difference Δb^{*} before and after storage of the laminated piezoelectric body in an environment of 85°C and 85% RH for 500 hours is preferably 4.0 or less, and more preferably 3.5 or less. When Δb^{*} before and after the storage of the laminated piezoelectric body is 4.0 or less, the change in hue of the laminated piezoelectric body under a high temperature and a high humidity is small, and thus the transparency and the visibility can be favorably maintained.

The b^{*} value of the laminated piezoelectric body can be measured by a method in accordance with JIS Z 8722 using a spectrocolorimeter (for example, SD7000, available from Nippon Denshoku Industries Co., Ltd.). The b^{*} value of the laminated piezoelectric body is to be measured at a position including the intersection of the diagonal lines of the laminated piezoelectric body.

The b^{*} value of the laminated piezoelectric body after the storage may be measured by cutting the laminated piezoelectric body into a 25 cm² square, fixing the four corners of the laminated piezoelectric body to a plate made of SUS with a tape, placing the fixed laminated piezoelectric body in a thermo-hygrostat set to a temperature of 85°C and a humidity of 85% RH, holding the laminated piezoelectric body for 500 hours under the above conditions, and then measuring the b^{*} value of the laminated piezoelectric body removed from the thermo-hygrostat in the same manner as the above method.

The b^{*} value and Δb^{*} of the laminated piezoelectric body can be adjusted by the thickness of the antistatic layer and the composition and the thickness of the moisture-proof layer. For example, when the thickness of the antistatic layer is reduced, the b^{*} value and Δb^{*} can be reduced. In addition, when the thickness of the moisture-proof layer is increased, discoloration of the piezoelectric film due to the penetration of moisture can be reduced, and the b^{*} value and the Δb^{*} can be reduced.

### Method for Producing Laminated Piezoelectric Body

The laminated piezoelectric body can be produced by any method. For example, the laminated piezoelectric body of FIG. 2 can be produced through (1) preparing a fluorine-based resin piezoelectric film, (2) forming an antistatic layer on the piezoelectric film, (3) forming a hard coat layer on the antistatic layer, (4) forming an optical adjustment layer on the hard coat layer, and (5) forming an electrode layer on the optical adjustment layer.

When the laminated piezoelectric body includes no hard coat layer, the step (3) can be omitted, and the steps (4) and (5) can also be omitted, as necessary. When the electrode layer contains a metal nanowire or a metal mesh as a conductive material, the step (4) may be omitted. From the viewpoint of further suppressing oxidation of the metal nanowire and the metal mesh, (6) forming an overcoat layer on the electrode layer and (7) forming a moisture-proof layer may be further performed.

Instead of the step (5), after the step (2) or the step (3), (6) forming a clear adhesive (OCA) layer on the hard coat layer or the optical adjustment layer may be performed, and (8) an electrode film can be bonded onto the OCA layer.

### Preparing Piezoelectric Film

As the piezoelectric film containing a fluorine-based resin, the above-described fluorine-based resin piezoelectric film can be used.

### Forming Antistatic Layer

The above-described curable composition for an antistatic layer is applied onto the obtained piezoelectric film and then dried and cured to form an antistatic layer. From the viewpoint of enhancing the low-temperature curability, the curable composition for an antistatic layer is preferably a curable composition containing a conductive material and an amine-based material, and more preferably a curable composition containing a conductive material and a melamine resin.

The curable composition may further contain water or a solvent. Examples of the solvent include alcohol-based solvents such as methanol, ethanol, and isopropyl alcohol.

The application method of the curable composition is not particularly limited, and may be any of, for example, a spin coating method, a gravure coating method, a die coating method, a bar coating method, and a dip coating method.

The drying of the curable composition can be performed by heating the applied curable composition. The heating temperature is preferably a temperature equal to or higher than a temperature at which the solvent can be removed and equal to or lower than the heat deflection temperature of the fluorine-based resin constituting the piezoelectric film, and can be set to, for example, 100°C or more and 150°C or less. The heat deflection temperature can be measured, for example, in accordance with JIS K 7191-2:2015.

### Forming Hard Coat Layer

In the present embodiment, the above curable composition for a hard coat layer is applied onto the piezoelectric film or the antistatic layer and then dried and cured to form a hard coat layer.

The curable composition may further contain a diluting solvent. As the diluting solvent, a solvent having a polarity close to that of the particles is preferable. Examples of the diluting solvent include organic solvents such as an alcohol-based solvent, a ketone-based solvent, an ester-based solvent, a carbonate-based solvent, and an aromatic solvent.

The curable composition can be applied by a known wet process method. Typical examples of the wet process method include dip coating, spray coating, spin coating, gravure coating, die coating, roll coating, flow coating, and curtain coating. In particular, a method capable of continuously forming a layer, such as a roll coating method or a gravure coating method, is preferable from the viewpoint of productivity.

The application and the drying method of the curable composition can be the same as the application and the drying method described above. Note that the heating temperature may be a temperature equal to or lower than the heat deflection temperature of the fluorine-based resin constituting the piezoelectric film, the heating temperature within a range in which the solvent can be volatilized and removed. The heating temperature can be, for example, 60°C or higher and 100°C or lower.

The curing of the curable composition may be curing by heat or curing by ionizing radiation. The curing by ionizing radiation can be performed by irradiation with ultraviolet light or an electron beam. Curing by heat and curing by ionizing radiation may be used in combination.

### Forming Optical Adjustment Layer

As in forming the hard coat layer, the curable composition is applied onto the piezoelectric film, the antistatic layer, or the hard coat layer, and then dried and cured, and thus an optical adjustment layer is formed. However, when the electrode layer contains a metal nanowire or a metal mesh as a conductive material, the optical adjustment layer can be omitted because the conductive layer has high transparency.

### Forming Electrode Layer

An electrode layer can be formed by sputtering a transparent conductive material or applying a solution containing a transparent conductive material and a resin, on the optical adjustment layer.

When the electrode layer contains a metal nanowire or a metal mesh as a conductive material, the conductive material may be oxidized and deteriorated to increase the electric resistance, and thus an overcoat layer can be formed on the electrode layer.

### Other Embodiments

The aforementioned embodiments are exemplary embodiments of the present invention, and it goes without saying that the present invention may include an embodiment other than the aforementioned embodiments within the scope of its core technical concept.

### EXAMPLES

The present invention will be described in detail based on Examples, but the present invention is not limited to these Examples.

Note that the melt viscosities of fluorine-based resins used as materials were measured in accordance with ASTM D 3835:2016 (ISO 11443:2021, JIS K 7199:1999). Specifically, each of the viscosities was measured at a measurement temperature of 260°C and a shear rate of 50 s⁻¹ using a capillary rheometer (Capilograph 1D, available from Toyo Seiki Seisaku-sho, Ltd.) and a capillary die having an inner diameter of φ 1 mm and a tube length of 10 mm.

The melting temperature of each of the fluorine-based resins was determined as the maximum peak temperature of an endothermic curve in a DSC curve obtained by sealing 5 mg of a measurement sample in an aluminum pan, placing the aluminum pan in a differential scanning calorimeter (DSC-60A, available from Shimadzu Corporation), and heating the aluminum pan from room temperature to 230°C at a temperature rising rate of 10°C/min under a nitrogen atmosphere.

The melting temperature at the time of film production was defined as the highest temperature in a conduit from an extruder to a filtration device.

### Experiment 1 Preparation and Evaluation of Fluorine-Based Resin Film

In Experiment 1, unstretched and non-polarized fluorine-based resin films were prepared, and various properties and a haze after stretching and polarization were evaluated.

### 1. Fluorine-Based Resin Film

### 1-1. Preparation of Film

Films 1 to 7 and 10, which were all fluorine-based resin films, were prepared by the following procedure.

### 1-1-1. Film 1-1

A vinylidene fluoride homopolymer (PVDF) having a melt viscosity of 800 Pa·s and a melting temperature of 173°C was melted using a single screw extruder having a bore diameter of φ 50 mm. Next, the resultant was filtered through a pleated polymer filter having a filtration accuracy of 20 µm, and extruded into a film shape from a T-die. At this time, the melting temperature and the filtration temperature were 260°C. The extruded film was brought into contact with a cooling roll having a surface temperature of 50°C while the temperature was maintained at 150°C or higher, and thus a film 1-1 which was an unstretched fluorine-based resin film having a thickness of 183 µm was obtained.

### 1-1-2. Film 1-2

A film 1-2 was obtained in the same manner as in the preparation of the film 1-1 except that no filter was attached to the single screw extruder.

### 1-1-3. Film 1-3

A film 1-3 was obtained in the same manner as in the preparation of the film 1-1 except that no filter was attached to the single screw extruder and the surface temperature of the cooling roll was set to 70°C.

### 1-1-4. Film 1-4

A film 1-4 was obtained in the same manner as in the preparation of the film 1-1 except that PVDF having a melt viscosity of 2500 Pa·s and a melting temperature of 173°C was used and the surface temperature of the cooling roll was set to 110°C.

### 1-1-5. Film 1-5

A film 1-5 was obtained in the same manner as in the preparation of the film 1-1 except that a polyvinylidene fluoride homopolymer (PVDF) having a melt viscosity of 3400 Pa·s and a melting temperature of 173°C prepared by mixing PVDF having a melt viscosity of 2500 Pa·s and a melting temperature of 173°C and PVDF having a melt viscosity of 4500 Pa·s and a melting temperature of 173°C at a mass ratio of 1 : 1 was used, and the surface temperature of the cooling roll was set to 110°C.

### 1-1-6. Film 1-6

A film 1-6 was obtained in the same manner as in the preparation of the film 1-1 except that the surface temperature of the cooling roll was set to 130°C.

### 1-1-7. Film 1-7

A film 1-7 was obtained in the same manner as in the preparation of the film 1-1 except that PVDF having a melt viscosity of 2500 Pa·s and a melting temperature of 173°C was used, the melting temperature was set to 280°C, no filter was attached to the single screw extruder, and the surface temperature of the cooling roll was set to 140°C.

### 1-1-8. Film 1-8 (preparation was impossible)

An attempt was made to prepare a film 8 in the same manner as in the preparation of the film 1-1 except that PVDF having a melt viscosity of 4500 Pa·s and a melting temperature of 173°C was used. However, the filter was clogged with the resin and such a film could not be obtained.

### 1-1-9. Film 1-9 (preparation was impossible)

An attempt was made to prepare a film 9 in the same manner as in the preparation of the film 1-1 except that PVDF having a melt viscosity of 2500 Pa·s and a melting temperature of 173°C was used and a pleated polymer filter having a filtration accuracy of 5 µm was used. However, the filter was clogged with the resin and such a film could not be obtained.

### 1-1-10. Film 1-10

PVDF having a melt viscosity of 2500 Pa·s and a melting temperature of 173°C weighed to 100 g was added to 900 ml of n-methylpyrrolidone (NMP). The temperature was raised to 60°C while stirring with a stirrer was performed. The stirring was continued for 6 hours as it was to prepare a resin solution. The resin solution was filtered through a filter having a filtration accuracy of 40 µm. This resin solution was charged into an automatic coating machine, and thus a coating film having a liquid thickness of 600 µm was prepared. The coating film was dried at 120°C for 1 hour. Thus, a film 1-10 was obtained. The film 1-10 had a great maximum height of profile Rz, and it was difficult to accurately detect the amount of foreign substances.

### 1-2. Evaluation of Fluorine-Based Resin Film

For each of the films 1-1 to 1-7 and 1-10, which were the obtained unstretched films, the lamellar long period, the thickness, the number of foreign substances, the maximum height of profile Rz, and the haze were measured by the following methods.

### 1-2-1. Lamellar Long Period

The X-ray diffraction pattern of each of the films was measured by a small-angle X-ray scattering measuring apparatus, and the lamellar long period was calculated by the Bragg reflection equation.

Specifically, each of the films was placed in a small-angle X-ray scattering measurement apparatus (NANO-Viewer, available from Rigaku Corporation) equipped with a two-dimensional detector, and irradiated with CuKα rays (wavelength λ of 0.15418 nm) monochromatized with a Ni filter as an X-ray source, and a two-dimensional diffracted image of each of the films was measured. Then, the X-ray diffraction intensity (A (2θ)) with respect to the diffraction angle 2θ in a range of the diffraction angle 2θ from 0.200° to 2.000° was determined from the X-ray diffraction (scattering) intensity. A (2θ) included the X-ray scattering intensity (B (2θ)) of air. Thus, B (2θ) was measured with no film installed, and B (2θ) was subtracted from A (2θ), and thus the X-ray diffraction intensity (I (2θ)) of each of the films was obtained.

The background of I (2θ) was determined by linear approximation from the diffraction angle 2θ at which the lowest X-ray intensity was observed in the range of 2θ from 0.200° to 0.450°, the X-ray intensity at that diffraction angle, and the X-ray intensity at 2θ of 2.000°. Next, the background was subtracted from I (2θ), the diffraction angle 2θ at which the X-ray intensity was maximized was determined, and the lamellar period length was determined by the Bragg reflection equation of Equation 1.
[Math. 2]
Bragg reflection equation: $L = \frac{0.15418}{2 sin θ} \left(nm\right)$ (Equation 1)

### Method for Measuring Small-Angle X-Ray Scattering (Diffraction)

- Measurement apparatus: NANO-Viewer
- X-ray source: CuKα (monochromatized: Ni filter)
- Applied current: 20 mA, applied voltage: 40 kV
- 1st slit: φ 0.7 mm, 2nd slit: φ 0.6 mm, 3rd slit: φ 0.8 mm
- Camera length: 830 mm
- Detector: Imaging plate
- Measurement time: 2 hours
- Correction of diffraction angle: Si (111) plane
- Shape and size of sample: Each of the films was cut into a sample having a length of 30 mm and a width of 10 mm, the stretching direction (MD) serving as the length direction of the sample. The sample was set in such a manner that the longitudinal direction of the measurement folder was same as the sample length (the stretching direction of the film). At this time, for each of the samples, one or more samples were stacked such that the total thickness is 200 ± 20 µm.
- The sampling width was set to 0.001° when the two-dimensional diffracted image by the X-ray two-dimensional detector is converted into the X-ray scattering (diffraction) intensity profile with respect to the diffraction angle 2θ.

### 1-2-2. Thickness

A digital linear gauge (DG525H, available from Ono Sokki Co., Ltd.) and a gauge stand (SH-022, available from Ono Sokki Co., Ltd.) were used. Specifically, when, in each of the fluorine-based resin films, each having a rectangular shape, the intersection of the diagonal lines was defined as a center point A and the long-side direction was defined as a width direction, the thickness was measured at a total of three measurement points, i.e., the center point A (measurement point) and two measurement points set at positions 30 mm away from the center point A toward both ends on a line segment passing through a midpoint A parallel to the long side, and the average value thereof was defined as the thickness of each of the fluorine-based resin films.

### 1-2-3. Number of Foreign Substances

A fluororesin-based film was uniaxially stretched to have a thickness from 35.0 µm to 40.0 µm, and 25 rectangular films (observation pieces), each having a size of 0.010 m² (100 mm × 100 mm), were cut from each of the fluorine-based resin films so that the 25 rectangular films were cut from continuously adjacent positions. The sum of the numbers of foreign substances measured by observing the respective observation pieces was determined as the number of foreign substances per 0.250 m². At this time, the foreign substances were marked by observation with transmitted light, and the size of each of the foreign substances was determined by observing each of the marked portions with a microscope. The size of each of the foreign substances was defined as an arithmetic average value of a maximum width and a minimum width of each of the foreign substances. In this manner, the number of foreign substances, each having a size of more than 200 µm, the number of foreign substances, each having a size of 100 µm or more and 200 µm or less, and the number of foreign substances, each having a size of less than 100 µm, were determined.

### 1-2-4. Maximum Height of Profile Rz

A surface roughness profilometer (shape analysis laser microscope VK-X260, available from Keyence Corporation) in accordance with JIS B 0601:2001 was used. Specifically, when the intersection of diagonal lines of the piezoelectric film was defined as a center point A and the long-side direction was defined as a width direction, the maximum height of profile Rz was measured at a total of three measurement points, i.e., the point A (measurement point) and two measurement points set at positions 30 mm away from the point A toward both ends on a line segment in the width direction passing through the point A, and the average value thereof was defined as the maximum height of profile Rz of the fluorine-based resin film.

### 1-2-5. Haze

A haze meter (NDH7700SP II, available from Nippon Denshoku Industries Co., Ltd.) was used. Haze was measured in accordance with ISO 14782:2021. Specifically, when, in each of the fluorine-based resin films, each having a rectangular shape, the intersection of the diagonal lines was defined as a center point A and the long-side direction was defined as a width direction, the haze was measured at a total of three measurement points, i.e., the center point A (measurement point) and two measurement points set at positions 30 mm away from the center point A toward both ends on a line segment passing through a midpoint A parallel to the long side, and the average value thereof was defined as the haze of each of the fluorine-based resin films. The haze was divided by the thickness of each of the films measured in (1-2-2), and thus the haze per unit thickness of each of the fluorine-based resin films was obtained.

### 1-3. Evaluation Results of Fluorine-Based Resin Film

### 1-3-1. Physical Properties of Fluorine-Based Resin Film

The preparation conditions and the evaluation results of the respective films are shown in Tables 1 and 2. Note that the film 10 had a high haze and was opaque, and the number of foreign substances could not measured.

**[Table 1]**

| Remarks | | | Example | Example | Example | Example | Example |
|---|---|---|---|---|---|---|---|
| Film No. | | | 1-1 | 1-2 | 1-3 | 1-4 | 1-5 |
| Production method | Fluorine-based resin | Melt viscosity/Pa·s | 800 | 800 | 800 | 2500 | 3400 |
| | | Melting point mp/°C | 173 | 173 | 173 | 173 | 173 |
| | Melting step | Melting temperature/°C | 260 | 260 | 260 | 260 | 260 |
| | Filtering configuration | Filtration accuracy/µm | 20 | - | - | 20 | 20 |
| | | Differential pressure/MPa | 2 | - | - | 5.7 | 7.8 |
| | Film forming step | Film forming method | Melting and extrusion | Melting and extrusion | Melting and extrusion | Melt-extrusion | Melt-extrusion |
| | | Cooling roll temperature/°C | 50 | 50 | 70 | 110 | 110 |
| Result | Lamellar period length/nm | | 9.6 | 9.6 | 10.7 | 11.0 | 10.6 |
| | Thickness/µm | | 183 | 179 | 182 | 163 | 155 |
| | Number of foreign substances (number/ 0.25 m²) | > 200 µm | 0 | 2 | 3 | 0 | 0 |
| | | 100 to 200 µm | 3 | 8 | 6 | 1 | 2 |
| | | < 100 µm | 20 | 28 | 31 | 22 | 18 |
| | Rz surface/µm | | 0.32 | 0.30 | 0.36 | 0.45 | 0.46 |
| | Haze per unit thickness/%/µm | | 0.23 | 0.25 | 0.29 | 0.30 | 0.30 |

**[Table 2]**

| Remarks | | | Comparative Example | Comparative Example | Comparative Example | Comparative Example | Comparative Example |
|---|---|---|---|---|---|---|---|
| Film No. | | | 1-6 | 1-7 | 1-8 | 1-9 | 1-10 |
| Production method | Fluorine-based resin | Melt viscosity/Pa·s | 800 | 2500 | 4500 | 2500 | 2500 |
| | | Melting point mp/°C | 173 | 173 | 173 | 173 | 173 |
| | Melting step | Melting temperature /°C | 260 | 280 | 260 | 260 | 60 |
| | Filtering configuration | Filtration accuracy/µm | 20 | - | 20 | 5 | 40 |
| | | Differential pressure/MPa | 2 | - | Filtering impossible | Filtering impossible | - |
| | Film forming step | Film forming method | Melt-extrusion | Melt-extrusion | Melt-extrusion | Melt-extrusion | Cast |
| | | Cooling roll temperature /°C | 130 | 140 | - | - | - |
| Result | Lamellar period length/nm | | 12.4 | 12.5 | - | - | 13.0 |
| | Thickness/µm | | 182 | 161 | - | - | 40 |
| | Number of foreign substances (number/ 0.25 m²) | > 200 µm | 0 | 3 | - | - | Evaluation impossible |
| | | 100 to 200 µm | 2 | 7 | - | - | Evaluation impossible |
| | | < 100 µm | 22 | 30 | - | - | Evaluation impossible |
| | Rz surface/µm | | 0.41 | 0.90 | - | - | 0.53 |
| | Haze per unit thickness/%/µm | | 0.53 | 0.47 | - | - | 1.88 |

### 1-3-2. Relationship Between Lamellar Long Period and Piezoelectric Constant

The film 1-1 and the film 1-6 were introduced into a uniaxial stretching apparatus equipped with a plurality of metal rolls and pinch rolls, and stretched to 4.6 times in the flow direction by adjusting rotation speed ratios of the respective rolls. Further, a voltage of 7.0 kV to 10.0 kV was applied in the thickness direction from the surface of each of the films, and thus the films were polarized.

The piezoelectric constant d₃₃ of each of the polarized films was measured in accordance with ISO 19622:2018. Specifically, a test piece of each of the fluorine-based resin films was held at a holding force of 1.0 N, and a charge generated when an alternating force with an oscillating force of 0.15 N and a frequency of 110 Hz was applied was measured using a piezoelectric constant measuring device (PiezoMeter System PM300, available from PIEZOTEST Pte Ltd.). The charge was measured on the polarized surface of each of the films, and the piezoelectric constant was calculated using the absolute value of each of the measured values. The fast axis direction determined by measuring the birefringence was defined as a width direction, and a randomly selected point on the midpoint line of the line segment connecting both ends in the width direction of each of the films was defined as a point A, and the piezoelectric constant d₃₃ was measured at a total of three measurement points, i.e., the point A (measurement point) and two measurement points set at positions 30 mm away from the point A toward both ends on the line segment in the width direction passing through the point A, and the average value of the piezoelectric constants determined therefrom was defined as the piezoelectric constant d₃₃ of each of the films.

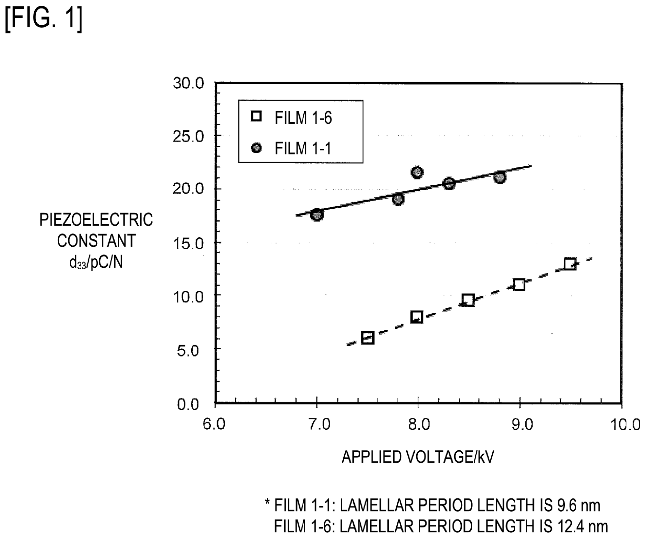

The relationship between the applied voltage and the piezoelectric constant d₃₃ of each of the film 1-1 (where the lamellar long period is 9.6 nm) and the film 1-6 (where the lamellar long period is 12.4 nm) is shown in FIG. 1.

As shown in FIG. 1, the piezoelectric constant d₃₃ of the film 1-1 having a small lamellar long period was higher than that of the film 1-6 having a large lamellar long period.

Experiment 2 Preparation and Evaluation of Fluorine-Based Resin Piezoelectric Film

In Experiment 2, a fluorine-based resin piezoelectric film was prepared by subjecting each of the fluorine-based resin films to a stretching treatment and a polarizing treatment, and evaluated.

### 2. Fluorine-Based Resin Piezoelectric Film

### 2-1. Method for Preparing Fluorine-Based Piezoelectric Film

### 2-1-1. Piezoelectric Film 2-1

The film 1-1 obtained in Experiment 1 was introduced into a uniaxial stretching apparatus equipped with a plurality of metal rolls and pinch rolls, and stretched to 4.6 times in the flow direction by adjusting rotation speed ratios of the respective rolls. Further, a voltage of 8.0 kV was applied in the thickness direction from the surface of the film, and thus a piezoelectric film 2-1 was obtained.

### 2-1-2. Piezoelectric Film 2-2

A piezoelectric film 2-2 was obtained from the film 1-2 by stretching the film in the same manner as in the piezoelectric film 2-1 except that the voltage applied for the polarization treatment was set to 8.8 kV.

### 2-1-3. Piezoelectric Film 2-3

A film 1-11 was prepared in the same manner as in the preparation of the film 1-1 in Experiment 1 except that the surface temperature of the cooling roll was set to 110°C, and the film 1-11 was stretched and polarized in the same manner as in the piezoelectric film 2-2, and thus a piezoelectric film 2-3 was obtained.

### 2-1-4. Piezoelectric Film 2-4

A film 1-12 was obtained in the same manner as in the preparation of the film in Experiment 1 except that PVDF having a melt viscosity of 2500 Pa·s and a melting temperature of 173°C was used and the surface temperature of the cooling roll was set to 80°C, and a piezoelectric film 2-4 was obtained in the same manner as in the preparation of the piezoelectric film 2-1 except that the film 1-12 was used as a material.

### 2-1-5. Piezoelectric Film 2-5

A film 1-13 was obtained in the same manner as in the preparation of the film in Experiment 1 except that PVDF having a melt viscosity of 2500 Pa·s and a melting temperature of 173°C was used and the surface temperature of the cooling roll was set to 110°C, and a piezoelectric film 2-5 was obtained in the same manner as in the preparation of the piezoelectric film 2-1 except that the film 1-13 was used as a material and the voltage applied after stretching was set to 8.8 kV.

### 2-1-6. Piezoelectric Film 2-6

The film 1-5 obtained in Experiment 1 was stretched and polarized in the same manner as in the piezoelectric film 2-2, and thus a piezoelectric film 2-6 was obtained.

### 2-1-7. Piezoelectric Film 2-7

The film 1-6 obtained in Experiment 1 was stretched and polarized in the same manner as in the piezoelectric film 2-1, and thus a piezoelectric film 2-7 was obtained.

### 2-1-8. Piezoelectric Film 2-8

A film 1-14 was prepared in the same manner as in the preparation of the film in Experiment 1 except that PVDF having a melt viscosity of 4500 Pa·s and a melting temperature of 173°C was used, no filter was attached to the single screw extruder, the melting temperature was set to 280°C, and the surface temperature of the cooling roll was set to 140°C. A piezoelectric film 2-8 was obtained in the same manner as in the preparation of the piezoelectric film 1 except that a film 1-15 was used as a material and the voltage applied after stretching was set to 9.5 kV.

### 2-1-9. Piezoelectric Film 2-9

A voltage of 8.0 kV was applied on the film 1-10 obtained in Experiment 1 in the thickness direction from the surface of the film, and thus a piezoelectric film 2-9 was obtained. The piezoelectric film 2-9 did not have piezoelectricity, but was referred to as a piezoelectric film herein.

### 2-2. Evaluation of Fluorine-Based Resin Piezoelectric Film

For each of the obtained piezoelectric films 2-1 to 2-9, the lamellar long period, the retardation, the piezoelectric constant d₃₃, the haze, the internal haze, the maximum height of profile Rz, the number of foreign substances, and the thickness were measured by the following methods.

### 2-2-1. Lamellar Long Period

The measurement was performed in the same manner as in Experiment 1.

### 2-2-2. Retardation

The retardation of each of the films cut into a piece having a size of 20 mm × 20 mm was measured by a parallel Nicol rotation method using KOBRA-HB available from Oji Scientific Instruments Co., Ltd. and using a measurement wavelength of 587.8 nm as a light source. At this time, the fast axis and the slow axis were determined from the in-plane birefringence of each of the films. The slow axis direction coincided with the average direction of the molecular chains oriented by stretching or extrusion. Each of the films used in this Example was stretched in the flow direction of each of the films (machine direction), and thus the MD direction and the slow axis direction coincided with each other.

### 2-2-3. Piezoelectric Constant d₃₃

The piezoelectric constant of each of the fluorine-based resin piezoelectric films was measured in the same manner as in the measurement method of Experiment 1 (1-3-2). Specifically, the fast axis direction determined by measuring the birefringence of each of the fluorine-based resin piezoelectric films was defined as a width direction, and a randomly selected point on the midpoint line of the line segment connecting both ends of each of the films in the width direction was defined as a point A, and the piezoelectric constant d₃₃ was measured at a total of three measurement points, i.e., the point A (measurement point) and two measurement points set at positions 30 mm away from the point A toward both ends on the line segment in the width direction passing through the point A, and the average value of the piezoelectric constants obtained therefrom is defined as the piezoelectric constant d₃₃ of each of the fluorine-based resin piezoelectric films.

### 2-2-4. Haze of Film

The haze of each of the fluorine-based resin piezoelectric films was measured in the same manner as in the measurement method of Experiment 1 (1-2-5) except for the setting of the measurement points. Specifically, the fast axis direction determined by measuring the birefringence of each of the fluorine-based resin piezoelectric films was defined as a width direction, and a randomly selected point on the midpoint line of the line segment connecting both ends of the film in the width direction was defined as a point A, and a piezoelectric constant haze was measured at a total of three measurement points, i.e., the point A (measurement point) and two measurement points set at positions 30 mm away from the point A toward both ends on the line segment in the width direction passing through the point A, and the average value of the piezoelectric constants obtained therefrom was defined as the haze of each of the fluorine-based resin piezoelectric films.

### 2-2-5. Internal Haze

The fast axis direction obtained by measuring the birefringence of each of the fluorine-based resin piezoelectric films was defined as a width direction, a randomly selected point on the midpoint line of the line segment connecting both ends of each of the films in the width direction was defined as a point A, and a measurement sample having a size of 30 mm × 30 mm was cut out in such a manner that the point A was the center of diagonal lines of the measurement sample, and two measurement samples were cut out toward both ends in the width direction so as to be adjacent to the measurement sample, and a total of three measurement samples were collected. A hard coating agent (BS CH271, available from Arakawa Chemical Industries, Ltd.) was applied to one of the surfaces of each of the three cut-out measurement samples with a bar coater, and dried at 80°C for 30 minutes. Next, using an ultraviolet light (UV) irradiator (CSOT040, available from GS NIPPON DENCHI), UV irradiation is performed in such a manner that the target integrated light quantity reaches 400 mJ/cm². Thus, a coating layer having a thickness of 2 µm is formed. Assuming that an external haze, for example, due to a scratch on the film surface was removed by these coating layers, the measured haze value was defined as an internal haze. The average value of the three measurement samples measured in the same manner was defined as a representative value of each of the fluorine-based resin piezoelectric films.

### 2-2-6. Maximum Height of Profile Rz

The maximum height of profile Rz of each of the fluorine-based resin piezoelectric films was measured in the same manner as in the above measurement method of Rz of the film not having piezoelectricity except for the setting of the measurement points. Specifically, the fast axis direction determined by measuring the birefringence of each of the piezoelectric films was defined as a width direction, and a randomly selected point on the midpoint line of the line segment connecting both ends of the film in the width direction was defined as a point A, and the maximum height of profile Rz was measured at a total of three measurement points, i.e., the point A (measurement point) and two measurement points set at 30 mm intervals from the point A toward both ends on the line segment in the width direction passing through the point A, and the average value thereof was defined as the maximum height of profile Rz of the fluorine-based resin piezoelectric film.

### 2-2-7. Number of Foreign Substances

The measurement was performed in the same manner as in Experiment 1 (1-2-3) except that the thickness of each of the fluorine-based resin piezoelectric films was 40 µm or less, and thus the uniaxial stretching for adjusting the thickness of the film was not performed.

### 2-2-8. Thickness

The thickness of each of the fluorine-based resin piezoelectric films was measured in the same manner as in the above measurement method (1-2-2) of Rz of the film not having piezoelectricity except for the setting of the measurement points. Specifically, the fast axis direction determined by measuring the birefringence of each of the piezoelectric films was defined as a width direction, and a randomly selected point on the midpoint line of the line segment connecting both ends of each of the films in the width direction was defined as a point A, and the thickness was measured at a total of three measurement points, i.e., the point A (measurement point) and two measurement points set at positions 30 mm away from the point A toward both ends on the line segment in the width direction passing through the point A, and the average value thereof was defined as the thickness of each of the fluorine-based resin piezoelectric films.

### 2-3. Evaluation Results of Fluorine-Based Piezoelectric Film

The preparation conditions and the evaluation results of the respective films are shown in Tables 3 and 4.

**[Table 3]**

| | | | | Example | Example | Example | Example | Example | Example |
|---|---|---|---|---|---|---|---|---|---|
| Piezoelectric film No. | | | | 2-1 | 2-2 | 2-3 | 2-4 | 2-5 | 2-6 |
| Method for producing piezoelectric film | Fluorine-based resin film No.before stretching and polarizing | | | 1-1 | 1-2 | 1-11 | 1-12 | 1-13 | 1-5 |
| | Method for producing film | Melt viscosity/Pa·s | | 800 | 800 | 800 | 2500 | 2500 | 3400 |
| | | Filtration accuracy/µm | | 20 | - | 20 | 20 | 20 | 20 |
| | | Cooling roll temperature/°C | | 50 | 50 | 110 | 80 | 110 | 110 |
| | Stretch ratio/times | | | 4.6 | 4.6 | 4.6 | 4.6 | 4.6 | 4.6 |
| | Polarization/kV | | | 8.0 | 8.8 | 8.8 | 8.0 | 8.8 | 8.8 |
| Result | Lamellar long period/nm | | | 11.0 | 10.9 | 10.0 | 11.0 | 10.8 | 10.9 |
| | Retardation/nm | | | 1306 | 1308 | 1268 | 1246 | 1261 | 1027 |
| | Piezoelectric constant d₃₃/pC/N | | | 20.6 | 20.4 | 18.9 | 20.0 | 20.4 | 22.3 |
| | Haze/% | | | 2.1 | 2.1 | 3.6 | 1.4 | 1.9 | 1.4 |
| | Internal haze/% | | | 0.60 | 0.60 | 1.10 | 0.56 | 0.73 | 0.40 |
| | R_{Z} surface/µm | | | 0.22 | 0.20 | 0.18 | 0.19 | 0.20 | 0.20 |
| | Number of foreign substances (number/ 0.25 m²) | | > 200 µm | 0 | 2 | 0 | 0 | 0 | 0 |
| | | | 100 to 200 µm | 3 | 8 | 2 | 1 | 1 | 2 |
| | | | < 100 µm | 20 | 28 | 31 | 20 | 18 | 18 |
| | Thickness/µm | | | 39.1 | 39.3 | 38.6 | 38.6 | 38.0 | 39.7 |

**[Table 4]**

| | | Comparative Example | Comparative Example | Comparative Example | |
|---|---|---|---|---|---|
| Piezoelectric film No. | | 2-7 | 2-8 | 2-9 | |
| Method for producing piezoelectric film | Fluorine-based resin film before stretching and polarizing | | 1-6 | 1-14 | 1-10 |
| | Method for producing film | Melt viscosity/Pa·s | 800 | 4500 | 2500 |
| | | Filtration accuracy/µm | 20 | - | - |
| | | Cooling roll temperature/°C | 130 | 140 | - |
| | Stretch ratio/times | | 4.6 | 4.6 | - |
| | Polarization voltage/kV | | 8.0 | 9.5 | 8.0 |
| Result | Lamellar long period/nm | | 11.6 | 11.2 | 12.0 |
| | Retardation/nm | | 1305 | 1128 | 1 |
| | Piezoelectric constant d₃₃/pC/N | | 12.9 | 18.9 | 0 |
| | Haze/% | | 13.6 | 3.8 | 75 |
| | Internal haze/% | | 9.80 | 1.20 | 70 |
| | R_{Z} surface/µm | | 0.21 | 0.70 | 0.53 |
| | Number of foreign substances (number/ 0.25 m²) | > 200 µm | 0 | 3 | Evaluation impossible |
| | | 100 to 200 µm | 2 | 7 | Evaluation impossible |
| | | < 100 µm | 22 | 30 | Evaluation impossible |
| | Thickness/µm | | 39.0 | 38.7 | 40.0 |

### Experiment 3 Preparation and Evaluation of Laminated Piezoelectric Body

In Experiment 3, laminated piezoelectric bodies were prepared using a fluorine-based resin piezoelectric film and evaluated.

### 3. Laminated Piezoelectric Body

### 3-1. Method for Preparing Constituent Elements of Laminated Piezoelectric Body

### 3-1-1. Antistatic Layer

### (1) Antistatic Layer 1

In a gravure coater (multicoater available from Hirano Tecseed Co., Ltd.), a solution with a coating material P-400MP-A (available from Nagase ChemteX Corporation) containing PEDOT:PSS as a conductive polymer and a coating material P-400MP-B (available from Nagase ChemteX Corporation) containing a crosslinking agent and a conductivity enhancer being mixed at a ratio of 4 : 1 was applied by a multicoater (available from Hirano Tecseed Co., Ltd.), and the resultant was subjected to a heat treatment at 130°C for 0.67 minutes. Thus, an antistatic layer having a thickness of 80 nm was obtained. The surface resistivity of the antistatic layer was 1.2 × 10⁸ Ω/sq.

### (2) Antistatic Layer 2

A solution (C-169PF) with a coating material C-169PF-A (available from Nagase ChemteX Corporation) containing single-walled carbon nanotubes and a coating material C-169PF-B (available from Nagase ChemteX Corporation) containing a crosslinking agent being mixed at a ratio of 3 : 2 was applied by a multicoater (available from Hirano Tecseed Co., Ltd.), and the resultant was subjected to a heat treatment at 130°C for 1 minute. Thus, an antistatic layer 2 having a thickness of 100 nm was obtained. The surface resistivity of the antistatic layer was 7.1 × 10⁶ Ω/sq.

### 3-1-2. Formation of Hard Coat Layer

A hard coating agent (BS-CH271 available from Arakawa Chemical Industries, Ltd., average particle size of amorphous silica: 60 nm) was applied by a multicoater, and the resultant was then subjected to a heat treatment at 80°C for 2 minutes, and further irradiated with UV at an integrated light quantity of 200 mJ/cm² and thus photocured, and a hard coat layer having a thickness of 700 nm and a refractive index of 1.50 was formed.

### 3-1-3. Optical Adjustment Layer

An ultraviolet curable composition containing zirconium oxide particles (OPSTAR RA004 available from Arakawa Chemical Industries, Ltd.) was applied and dried at 40°C for 30 seconds, and the resultant was then irradiated with ultraviolet light at an integrated light quantity of 250 mJ/cm², and an optical adjustment layer (thickness of 102 nm, refractive index of 1.65) was formed.

### 3-1-4 Transparent Electrode

### (1) Transparent Electrode Layer 1

An indium tin metal target (the content ratio of tin relative to the sum of the content of indium and the content of tin was 3 mass%) as a target material was mounted on a magnetron sputtering apparatus, and a piezoelectric film with a predetermined layer formed was mounted as a substrate. Then, while the piezoelectric film with the predetermined layer formed was wound, dehydration and degassing were performed, and evacuation was performed until the degree of vacuum reached 7 × 10⁻⁵ Pa. Subsequently, the substrate temperature was set to room temperature (25°C), a mixed gas having a composition of 99.2 mol% of argon gas and 0.8 mol% of oxygen gas was introduced into a chamber. While the gas in the chamber was discharged such that the pressure in the chamber is 0.4 Pa, a transparent electrode layer having a thickness of 30 nm and substantially composed of indium tin composite oxide was formed by a reactive sputtering method, and thus a laminated piezoelectric body was obtained.

### (2) Transparent Electrode Layer 2

A solution with a coating material T-AG230 (available from Seiko PMC Corporation) containing a silver nanowire, the coating material appropriately diluted with alcohol, was applied by a coater and dried with hot air at 40°C for 30 seconds, and thus a transparent electrode layer having a thickness of 80 nm was formed. Next, as a protective layer for the transparent electrode, a solution with a coating material T-YP562 (available from Seiko PMC Corporation) mixed with an additive T-YP462 (available from Seiko PMC Corporation) was applied onto the transparent electrode layer by a coater, dried with hot air at 40°C for 60 seconds, and then irradiated with ultraviolet light at an integrated light quantity of 330 mJ/cm², and thus a protective layer having a thickness of 80 nm was formed. Here, the transparent electrode layer and the protective layer are collectively referred to as a transparent electrode layer 2.

### (3) Transparent Electrode Film

A transparent electrode precursor film (TETOLIGHT TCF KH100NMH3-100-U8, available from OIKE & Co., Ltd.) with a polyethylene terephthalate (PET) film subjected to a sputtering treatment with indium tin oxide (ITO) was subjected to a crystallizing treatment at 150°C for 90 minutes. Thus, a transparent electrode film was prepared. The surface resistivity of the transparent electrode film 1 was 100 Ω/sq. Next, an optical clear adhesive (OCA) sheet (Nitto Denko Corporation, CS9862UA, thickness: 50 µm) was bonded to the polymer piezoelectric film with the predetermined layer formed, a release film was peeled off from the OCA sheet, and the transparent electrode film with the conductive layer surface facing the OCA sheet surface was bonded.

### 3-2. Layer Configuration of Laminated Piezoelectric Body

### 3-2-1. Laminated Piezoelectric Body 1

The antistatic layer 1 was formed on a surface A of the piezoelectric film 2-1, and then a hard coat layer was formed on the antistatic layer 1, and thus a laminated piezoelectric body 1 was prepared.

### 3-2-2. Laminated Piezoelectric Body 2

A transparent electrode layer 1 was formed on the hard coat layer of the laminated piezoelectric body 1, and thus a laminated piezoelectric body 2 was prepared.

### 3-2-3. Laminated Piezoelectric Body 3

A transparent electrode film was bonded onto the hard coat layer of the laminated piezoelectric body 1, and thus a laminated piezoelectric body 3 was prepared.

### 3-2-4. Laminated Piezoelectric Body 4

A laminated piezoelectric body 4 was prepared in the same manner as in the laminated piezoelectric body 2 except that the transparent electrode layer 2 was used instead of the transparent electrode layer 1.

### 3-2-5. Laminated Piezoelectric Body 5

A laminated piezoelectric body 5 was prepared in the same manner as in the laminated piezoelectric body 4 except that the antistatic layer 1 was changed to the antistatic layer 2.

### 3-2-6. Laminated Piezoelectric Body 6

A laminated piezoelectric body 6 was prepared in the same manner as in the laminated piezoelectric body 2 except that an optical adjustment layer was formed between the hard coat layer and the transparent electrode layer 1.

### 3-2-7. Laminated Piezoelectric Body 7

The antistatic layer 1 was formed on a surface A of the piezoelectric film 1, and the transparent electrode film 1 was bonded onto the antistatic layer 1, and thus a laminated piezoelectric body 7 was prepared.

### 3-2-8. Laminated Piezoelectric Body 8

The antistatic layer 1 was formed on a surface A of the piezoelectric film 1, and then the transparent electrode layer 1 was formed on the antistatic layer 1, and thus a laminated piezoelectric body 8 was prepared.

### 3-2-9. Laminated Piezoelectric Body 9

A laminated piezoelectric body 9 was prepared in the same manner as in the laminated piezoelectric body 8 except that the transparent electrode layer 1 was changed to the transparent electrode layer 2.

### 3-2-10. Laminated Piezoelectric Body 10

The antistatic layer 1 was formed on a surface A of the piezoelectric film 1, the optical adjustment layer was then formed on the antistatic layer 1, and the transparent electrode layer 1 was formed on the optical adjustment layer, and thus a laminated piezoelectric body 10 was prepared.

### 3-2-11. Laminated Piezoelectric Body 11

A laminated piezoelectric body 11 was prepared in the same manner as in the laminated piezoelectric body 8 except that a hard coat layer was formed on a surface A of the piezoelectric film 1 instead of the antistatic layer 1.

### 3-2-12. Laminated Piezoelectric Body 12

A laminated piezoelectric body 12 was prepared in the same manner as the laminated piezoelectric body 11 except that the transparent electrode layer 1 was replaced with the transparent electrode layer 2.

### 3-2-13. Laminated Piezoelectric Body 13

The hard coat layer was formed on a surface A of the piezoelectric film 1, the optical adjustment layer 1 was then formed on the hard coat layer, and the transparent electrode layer 1 was formed on the optical adjustment layer 1, and thus a laminated piezoelectric body 13 was prepared.

### 3-2-14. Laminated Piezoelectric Body 14

A laminated piezoelectric body 14 was prepared in the same manner as in the laminated piezoelectric body 11 except that the hard coat layer was replaced with the optical adjustment layer.

### 3-2-15. Laminated Piezoelectric Body 15

The antistatic layer 1 was formed on a surface A of the piezoelectric film 1, a hard coat layer was formed on a surface B of the piezoelectric film 1. A separator film that protects an adhesive of a PET protective film (SAT TM30125T available from Sun A. Kaken Co., Ltd.) was peeled off, and the PET protective film was bonded onto the hard coat layer on the surface B. Next, a hard coat layer and an optical adjustment layer were formed on the antistatic layer 1 on the surface A, and the transparent electrode layer 1 was further formed on the optical adjustment layer, and thus a laminated piezoelectric body 15 was prepared.

### 3-2-16. Laminated Piezoelectric Body 16

The antistatic layer 1 was formed on a surface A of the piezoelectric film 1, a hard coat layer was formed on a surface B of the piezoelectric film 1. A separator film that protects an adhesive of a PET protective film (SAT TM30125T available from Sun A. Kaken Co., Ltd.) was peeled off, and the PET protective film was bonded onto the hard coat layer on the surface B. Next, a hard coat layer and the transparent electrode layer 2 were formed on the antistatic layer 1 on the surface A, and thus a laminated piezoelectric body 16 was prepared.

### 3-3. Evaluation of Laminated Piezoelectric Body

The piezoelectric constant d₃₃, the total light transmittance, the surface resistivity, the haze, and the b^{*} of each of the obtained laminated piezoelectric bodies 1 to 16 were measured by the following methods.

### 3-3-1. Piezoelectric Constant

The measurement was performed in the same manner as in the measurement method (2-2-3) in Experiment 2 except that a value measured in a range including the intersection of the diagonal lines of each of the laminated piezoelectric bodies was taken as the representative value of the piezoelectric constant d₃₃ of each of the laminated piezoelectric bodies.

### 3-3-2. Total Light Transmittance

As for the total light transmittance of each of the laminated piezoelectric bodies, a range including the intersection of the diagonal lines of each of the laminated piezoelectric bodies was measured using a haze meter (NDH7000SP II, available from Nippon Denshoku Industries Co., Ltd.) in accordance with JIS K 7361-1, and the obtained value was taken as the representative value.

### 3-3-3. Surface Resistivity

### (1) Surface Resistivity of Antistatic Layer

The surface resistivity of the antistatic layer of each of the laminated piezoelectric bodies was measured in accordance with JIS C 2139-3-2:2018 using, for example, a known resistivity meter (for example, a high resistivity meter (available from Nittoseiko Analytech Co., Ltd., Hiresta UX, model number: MCP-HT800, URS probe). As for the measurement place, the surface resistivity of the antistatic layer measured in a range including the intersection of the diagonal lines of each of the laminated piezoelectric bodies, each having a rectangular shape, was taken as the representative value.

### (2) Surface Resistivity of Transparent Electrode

The surface resistivity of the transparent electrode of each of the laminated piezoelectric bodies was measured using a resistivity meter ("LorestaGP MCP-T610", available from Nittoseiko Analytech Co., Ltd.) and a direct current four-probe method in accordance with JIS K 7194. The volume resistivity is the product of the surface resistivity and the thickness, and thus the surface resistivity was measured in accordance with the method for measuring the volume resistivity. As for the measurement place, the surface resistivity of the transparent electrode measured in a range including the intersection of the diagonal lines of each of the laminated piezoelectric bodies, each having a rectangular shape, was taken as the representative value. When a protective layer was formed on the electrode, the surface resistivity was measured on the protective layer.

### 3-3-4. Haze

As the haze value of each of the laminated piezoelectric bodies, the result of measuring the haze of a range including the intersection of diagonal lines of each of the laminated piezoelectric bodies using a haze meter ("NDH7000SP II", available from Nippon Denshoku Industries Co., Ltd.) in accordance with JIS K 7136 was taken as the representative value.

### 3-3-5. Hue Difference Δb^{*} Value

The result of measuring a range including the intersection of the diagonal lines of each of the laminated piezoelectric bodies before the damp heat storage using a spectral colorimeter (available from Nippon Denshoku Industries Co., Ltd., SD7000) by a method in accordance with JIS Z 8722 was taken as the representative value of the hue b^{*} value.

### 3-3-6. Thickness

The thickness of each of the antistatic layers was measured using a spectroscopic interferometric thickness meter (Optical NanoGauge C13027-11, available from Hamamatsu Photonics K.K.). The thickness of each layer in a range including the intersection of the diagonal lines of each of the laminated piezoelectric bodies was measured. The thickness of each layer other than the transparent electrode and the piezoelectric film was also measured by the same method.

As for the thickness of the transparent electrode, the cross-section of each of the laminated piezoelectric bodies was observed using a scanning electron microscope ("SU3800", available from Hitachi High-Technologies Corporation) under the conditions of an acceleration voltage of 3.0 kV and a magnification of 50000 times and the thickness of the transparent electrode in a range including the intersection of the diagonal lines of each of the laminated piezoelectric bodies was measured. The obtained measured value was taken as the representative value of the thickness of the transparent electrode.

### 3-4. Result

The preparation conditions and the evaluation results of the respective laminated piezoelectric bodies are shown in Tables 5 and 6.

**[Table 5]**

| | Antistatic layer No. | Hard coat layer | Optical adjustment layer | Transparent electrode | |
|---|---|---|---|---|---|
| | | | | Transparent electrode film | Electrode layer No. |
| Laminated piezoelectric body 1 | 1 | ○ | - | - | - |
| Laminated piezoelectric body 2 | 1 | ○ | - | - | 1 |
| Laminated piezoelectric body 3 | 1 | ○ | - | ○ | |
| Laminated piezoelectric body 4 | 1 | ○ | - | - | 2 |
| Laminated piezoelectric body 5 | 2 | ○ | - | - | 2 |
| Laminated piezoelectric body 6 | 1 | ○ | ○ | - | 1 |
| Laminated piezoelectric body 7 | 1 | - | - | ○ | - |
| Laminated piezoelectric body 8 | 1 | - | - | - | 1 |
| Laminated piezoelectric body 9 | 1 | - | - | - | 2 |
| Laminated piezoelectric body 10 | 1 | - | ○ | - | 1 |
| Laminated piezoelectric body 11 | - | ○ | - | - | 1 |
| Laminated piezoelectric body 12 | - | ○ | - | - | 2 |
| Laminated piezoelectric body 13 | - | ○ | ○ | - | 1 |
| Laminated piezoelectric body 14 | - | - | ○ | - | 1 |
| Laminated piezoelectric body 15 | 1 | ○, ○ | ○ | - | 1 |
| Laminated piezoelectric body 16 | 1 | ○, ○ | - | - | 2 |

| | | | | | |
|---|---|---|---|---|---|
| (The symbol ○, ○ in the laminated piezoelectric bodies 15 and 16 means that the hard coat layers are formed on both surfaces of the piezoelectric film) | | | | | |

**[Table 6]**

| | Piezoelectric constant d₃₃/ pC/N | Total light transmittance/ % | Surface resistivity/ Ω/sq. | Haze/ % | b*/ - |
|---|---|---|---|---|---|
| Laminated piezoelectric body 1 | 19.8 | 92.7 | 1.1 × 10¹⁰ | 0.4 | 0.2 |
| Laminated piezoelectric body 2 | 18.2 | 82.8 | 131.0 | 0.5 | 4.2 |
| Laminated piezoelectric body 3 | 17.3 | 88.5 | 101.0 | 0.7 | 1.1 |
| Laminated piezoelectric body 4 | 17.5 | 88.1 | 50.0 | 1.7 | 0.8 |
| Laminated piezoelectric body 5 | 17.8 | 88.0 | 41.0 | 1.6 | 0.8 |
| Laminated piezoelectric body 6 | 17.7 | 89.4 | 122.0 | 0.4 | 1.8 |
| Laminated piezoelectric body 7 | 18.6 | 88.5 | 110.0 | 0.8 | 1.1 |
| Laminated piezoelectric body 8 | 18.4 | 83.1 | 126.0 | 0.7 | 3.9 |
| Laminated piezoelectric body 9 | 17.9 | 87.4 | 47.0 | 1.8 | 0.8 |
| Laminated piezoelectric body 10 | 17.7 | 82.1 | 128.0 | 0.7 | 1.9 |
| Laminated piezoelectric body 11 | 18.1 | 83.3 | 117.0 | 0.5 | 4.0 |
| Laminated piezoelectric body 12 | 17.9 | 88.4 | 44.0 | 1.7 | 0.9 |
| Laminated piezoelectric body 13 | 17.2 | 89.1 | 115.0 | 0.5 | 1.7 |
| Laminated piezoelectric body 14 | 17.8 | 87.1 | 120.0 | 0.8 | 2.6 |
| Laminated piezoelectric body 15 | 17.3 | 89.4 | 125.0 | 0.3 | 1.7 |
| Laminated piezoelectric body 16 | 17.4 | 89.1 | 43.0 | 1.6 | 0.8 |

The present application claims priority from the JP 2024-006090 filed on January 18, 2024, and JP 2024-006097 filed on January 18, 2024. The matters described in the specification, claims, and drawings at the time of the initial patent filing of the applications are incorporated by reference into the present application.

### INDUSTRIAL APPLICABILITY

The fluorine-based resin film and the fluorine-based resin piezoelectric film according to the present invention have high transparency.

### REFERENCE SIGNS LIST

10 Laminated piezoelectric body
11 Piezoelectric film
12 Antistatic layer
13 Hard coat layer
14 Optical adjustment layer
15 Electrode layer

## Claims

1. A fluorine-based resin film having a melt viscosity η of 600 Pa·s or more and 4000 Pa·s or less, the melt viscosity η being measured at a measurement temperature of 260°C and a shear rate of 50 s⁻¹ during measurement, wherein
a lamellar long period determined by a small-angle X-ray scattering method is 11.5 nm or less.

2. The fluorine-based resin film according to claim 1, wherein the fluorine-based resin film is a film for a piezoelectric film and has a thickness of 80 µm or greater and 1000 µm or less.

3. The fluorine-based resin film according to claim 1, comprising
a structural unit derived from vinylidene fluoride as a main component.

4. The fluorine-based resin film according to claim 1, wherein
the number of foreign substances, each having a size of 100 µm or more, is 7/0.25 m² or less, the size being an arithmetic average value of a maximum width and a minimum width when the film is viewed in plan.

5. The fluorine-based resin film according to claim 1, wherein
a maximum height of profile Rz of a surface having a smaller maximum height of profile is 0.50 µm or less, the maximum height of profile Rz being measured in accordance with JIS B 0601:2001.

6. A method for producing the fluorine-based resin film described in any one of claims 1 to 5, the method comprising:
heat-melting a fluorine-based resin having a melt viscosity η of 600 Pa·s or more and 4000 Pa·s or less, the melt viscosity η being measured at a measurement temperature of 260°C and a shear rate of 50 s⁻¹ during measurement;
extruding the heat-melted fluorine-based resin and forming the heat-melted fluorine-based resin into a film shape; and
bringing the formed film into contact with a cooling roll having a surface temperature of 125°C or lower and cooling the formed film.

7. The method for producing the fluorine-based resin film according to claim 6, wherein
in the heat-melting, the fluorine-based resin is melted at a temperature higher than a melting temperature of the fluorine-based resin by 75°C or more and equal to or lower than a temperature higher than the melting temperature by 105°C, and the method further includes
filtering the fluorine-based resin melted at the temperature through a filter having a filtration accuracy of 10 µm or more and 40 µm or less.

8. A fluorine-based resin piezoelectric film having a melt viscosity η of 600 Pa·s or more and 4000 Pa·s or less, the melt viscosity η being measured at a measurement temperature of 260°C and a shear rate of 50 s⁻¹ during measurement, wherein
a lamellar long period determined by a small-angle X-ray scattering method is 11.5 nm or less, a retardation is 100 nm or more and 2000 nm or less, and a piezoelectric constant d₃₃ is 5.0 pC/N or more and 40.0 pC/N or less.

9. The fluorine-based resin piezoelectric film according to claim 8, wherein
an internal haze is less than 1.2%.

10. The fluorine-based resin piezoelectric film according to claim 8, wherein
a maximum height of profile Rz of a surface having a smaller maximum height of profile is 0.50 µm or less, the maximum height of profile Rz being measured in accordance with JIS B 0601:2001.

11. The fluorine-based resin piezoelectric film according to claim 8, wherein
the number of foreign substances, each having a size of 100 µm or more, is 7/0.25 m² or less, the size being an arithmetic average value of a maximum width and a minimum width when the film is viewed in plan.

12. The fluorine-based resin piezoelectric film according to claim 8, comprising
a homopolymer of vinylidene fluoride.

13. A method for producing the fluorine-based resin piezoelectric film described in any one of claims 8 to 12, the method comprising:
heating and melting a fluorine-based resin having a melt viscosity η of 600 Pa·s or more and 4000 Pa·s or less, the melt viscosity η being measured at a measurement temperature of 260°C and a shear rate of 50 s⁻¹ during measurement;
extruding the melted fluorine-based resin and forming the melted fluorine-based resin into a film shape;
bringing the formed film into contact with a cooling roll having a surface temperature of 125°C or lower and cooling the formed film;
stretching the cooled film; and
polarizing the cooled film.

14. The method for producing the fluorine-based resin piezoelectric film according to claim 13, wherein
in the melting, the fluorine-based resin is melted at a temperature higher than a melting point of the fluorine-based resin by 75°C or more and equal to or lower than a temperature higher than the melting point of the fluorine-based resin by 105°C.

15. The method for producing the fluorine-based resin piezoelectric film according to claim 14, the method further comprising
filtering the fluorine-based resin melted in the melting through a filter having a filtration accuracy of 10 µm or more and 40 µm or less.

16. A laminated piezoelectric body comprising
the fluorine-based resin piezoelectric film described in claim 8, wherein
a total light transmittance is 80% or more.

17. The laminated piezoelectric body according to claim 16, further comprising
an electrode layer disposed on at least one surface of the fluorine-based resin piezoelectric film and having a surface resistivity of 1.0 × 10⁻¹ Ω/sq. or more and 1.0 × 10⁴ Ω/sq. or less.

18. The laminated piezoelectric body according to claim 17, wherein
the electrode layer contains at least one selected from the group consisting of a metal film, a metal oxide film, a metal nanowire, a metal mesh, a conductive polymer compound, a carbon nanotube, and graphene.

19. The laminated piezoelectric body according to claim 16 or 17, further comprising
a hard coat layer disposed on at least one surface of the fluorine-based resin piezoelectric film.

20. The laminated piezoelectric body according to claim 16 or 17, further comprising
an antistatic layer disposed on at least one surface of the fluorine-based resin piezoelectric film and having a surface resistivity of 1.0 × 10⁴ Ω/sq. or more and 1.0 × 10⁹ Ω/sq. or less.

21. The laminated piezoelectric body according to claim 16 or 17, wherein
an antistatic layer and a hard coat layer are disposed in this order on at least one surface of the fluorine-based resin piezoelectric film, and
a surface resistivity measured on the hard coat layer is 1.0 × 10⁶ Ω/sq. or more and 1.0 × 10¹² Ω/sq. or less.
